# EUROPEAN PATENT SPECIFICATION

(11) **EP 4 328 560 B1**
(45) Date of publication and mention of the grant of the patent: **05.08.2026**
(21) Application number: 23157861.8
(22) Date of filing: 21.02.2023
(51) Int. Cl.: G01L 3/10

(54) **MAGNETOELASTIC TORQUE SENSOR SYSTEM AND METHOD**
MAGNETOELASTISCHE DREHMOMENTSENSORVORRICHTUNG, SYSTEM UND VERFAHREN
DISPOSITIF, SYSTÈME ET PROCÉDÉ DE CAPTEUR DE COUPLE MAGNÉTOÉLASTIQUE

(30) Priority: 22.08.2022 EP 22191552
(43) Date of publication of application: 28.02.2024
(73) Proprietor: Melexis Technologies SA, 2022 Bevaix (CH)
(72) Inventor: BRAJON, Bruno, 2022 Bevaix (CH); GASPARIN, Enrico, 2022 Bevaix (CH); BARBUT, Lucian, 2022 Bevaix (CH); CLOSE, Gael, 2022 Bevaix (CH); VAN DER WIEL, Appo, 3980 Tessenderlo (BE)
(74) Representative: Jacobs, Lambert

(56) References cited:
- EP-A1- 3 885 779
- EP-A1- 3 974 846
- WO-A1-2021/048601
- WO-A1-2022/090117
- DE-A1- 102016 122 172
- DE-A1- 19 929 864

## Description

### Field of the invention

The present invention relates in general to the field of magnetic sensor devices, systems and methods, and more in particular to magnetoelastic torque sensors.

### Background of the invention

Magnetoelastic torque sensors are known in the art. They are based on a reversal of the physical effect of magnetostriction (deformation of magnetic materials by means of an applied magnetic field), wherein a torque, which impacts on the magnetized shaft, causes a torsion of the shaft and as a consequence a modification of the magnetic field outside of the shaft. This modification is very sensitive with regard to the extent of the torque and can be measured with a magnetic field sensor.

Magnetoelastic torque sensors are known in the art for more than 20 years, for example from US6047605A. Document WO2022/090117A1 discloses also a magnetoelastic torque sensor having an evaluation unit and at least three magnetic field sensors. The evaluation unit is designed to capture at least one measurement signal from a first magnetic field sensor, at least one measurement signal from a second magnetic field sensor and at least one third measurement signal from a third magnetic field sensor of the magnetoelastic torque sensor and to determine, by means of the at least one measurement signal from the first magnetic field sensor, the at least one measurement signal from the second magnetic field sensor, the at least one measurement signal from the fourth magnetic field sensor and the ratio of the distance between the second magnetic field sensor and the third magnetic field sensor in an axial direction to a distance between the first magnetic field sensor and the second magnetic field sensor in the axial direction , a torque exerted on the shaft.

There is always room for improvements or alternatives.

### Summary of the invention

It is an object of embodiments of the present invention to provide a magnetoelastic torque sensor system comprising a shaft and at least one magnetic sensor device.

It is an object of embodiments of the present invention to provide a method of measuring a torque exerted on a shaft.

It is an object of embodiments of the present invention to provide such a system or method using a shaft having only one axial zone which is magnetized in a circumferential direction, or having two axial zones which are magnetized in a single circumferential direction (e.g. both clockwise), or having two axial zones which are magnetized in opposite circumferential directions (e.g. one clockwise, and one counter-clockwise), or having three axial zones magnetized in different circumferential directions.

It is an object of embodiments of the present invention to provide such a system or method using a shaft having two axial zones which are spaced apart by a distance larger than 3.0 mm, or larger than 5.0 mm.

It is an object of embodiments of the present invention to provide such a system or method using a shaft having three axial zones.

It is an object of embodiments of the present invention to provide such a system with an improved accuracy (e.g. having a better signal-to-noise ratio and/or having a reduced sensitivity to an external disturbance field), and/or with a reduced complexity, and/or which is more compact than systems known in the art.

It is also an object of embodiments of the present invention to provide such a system wherein the sensor device can more easily be customized for a particular shaft, without requiring a complete redesign.

It is also an object of embodiments of the present invention to provide such a system wherein the sensor device is arranged differently relative to the shaft, resulting in a different form factor, and/or allowing a different mounting of the sensor device to e.g. a chassis.

It is also an object of embodiments of the present invention to provide a torque sensor system comprising a shaft and a sensor device, having dimensions which can more easily be changed or customized for a particular application (e.g. for use in E-bikes of various dimensions), without a complete redesign.

It is also an object of embodiments of the present invention to provide a torque sensor system comprising a shaft and at least one sensor device, which is less sensitive to a mounting position offset of the at least one sensor device, e.g. an offset in an axial direction of the shaft and/or an offset in a radial direction of the shaft, or both. In other words, a torque sensor system in which the mounting requirements of the at least one sensor device are relaxed.

The torque sensor system provided by the present invention can be used in E-bikes, in automotive applications, industrial applications and robotic applications.

These and other objectives are accomplished by embodiments of the present invention.

According to a first aspect, the present invention provides a magnetoelastic torque sensor system, comprising: a shaft comprising at least one (e.g. a first) axial section that is magnetized in a (e.g. first) circumferential direction; a magnetic sensor device arranged in the vicinity of the shaft, and comprising three semiconductor substrates, including a first semiconductor substrate comprising at least a processing circuit, a second semiconductor substrate comprising a first magnetic sensor, and a third semiconductor substrate comprising a second magnetic sensor, each magnetic sensor being configured for measuring a magnetic field component of a magnetic field generated by said shaft when a torque is exerted on the shaft; wherein the first and the second magnetic sensor are spaced apart from each other by a predefined distance; wherein the first, second and third semiconductor substrates are incorporated in a single packaged device having a plurality of terminals electrically connected to the first substrate; and wherein the processing circuit is configured for determining a pairwise difference (e.g. ΔBx) between the measured field components, and for outputting a signal or a value indicative of a torque exerted upon said shaft, based on said pairwise difference.

Such a magnetoelastic torque sensor is based on a reversal of the physical effect of magnetostriction (deformation of magnetic materials by means of an applied magnetic field), wherein a torque, which impacts on the magnetized shaft, causes a torsion of the shaft and as a consequence a modification of the magnetic field outside of the shaft. This modification is very sensitive with regard to the extent of the torque and can be measured with the magnetic field sensor.

The first substrate is also referred to herein as "main substrate".

The second substrate is also referred to herein as "first sensor substrate".

The third substrate is also referred to herein as "second sensor substrate".

The output signal may be a torque value (e.g. expressed in Nm), or may be a digital value proportional to the torque, or may be an analog signal (e.g. a voltage signal or a current signal) proportional to the torque.

The first substrate is arranged between the second and the third substrate. Alternatively, the second and the third substrate may be mounted on top of, or below the first substrate.

The first sensor and the second sensor may comprise for example one or more horizontal Hall elements (for measuring Bz); or an IMC disk with 2 horizontal Hall elements (e.g. for measuring Bx or By); or one or more vertical Hall elements (oriented in the same direction, e.g. for measuring Bx or By); or one or more magneto-resistive (MR) elements (e.g. AMR, XMR), (e.g. for measuring Bx or By), one or more GMI elements, etc.

The predefined direction may be X (parallel to the substrates, and defined by the positions of the sensor elements), or Y (parallel to the substrates, but orthogonal to X), or Z (perpendicular to the substrates.

In an embodiment, the output signal is proportional to said difference, e.g. using a constant K which is stored in a non-volatile memory of the sensor device.

It is an advantage of using a difference signal between two parallel field components, because the resulting output signal, has a reduced sensitivity to an external disturbance field.

The first and the second magnetic sensor are spaced apart from each other by a predefined distance (e.g. dx). This predefined distance may be related to one or more dimensions of the at least one axial zone of the shaft.

In an embodiment, the first substrate has a size of at most 2.0 mm x 2.0 mm or at most 1.5 mm x 1.5 mm, and each of the sensor substrates has a size of at most 0.8 mm x 0.8 mm or at most 0.5 mm x 0.5 mm or at most 0.4 mm x 0.4 mm or at most 0.3 mm x 0.3 mm, or at most 0.25 mm x 0.25 mm. It is a major advantage that contact zones of the sensor substrates will be connected to contact zones of the main substrate by means of one or more RDL layers, because such contact zones can be smaller than contact zones that are to be connected by means of bond wires or wire bonding. As a consequence, also the size of the sensor substrates can be reduced as compared to a sensor substrate having the same magnetic sensor but contact zones that will be connected using bond wires or wire bonding.

In an embodiment (of a wafer-level packaged device, or a device comprising a lead frame), the first substrate is spaced from each of the sensor substrates by at least 1.0 mm, or at least 1.5 mm, or at least 2.0 mm, or at least 2.5 mm

In this embodiment, the sensor substrates are deliberately situated at a relatively large distance from the first (or main) substrate, even if their size and technology allows them to be arranged closer together. This is counter-intuitive, because usually packages are made "as small as possible", which is not the case here.

Preferably the magnetic sensor device has a plurality of external terminals (also referred to herein as "external contacts"), which are electrically connected to the first substrate. The plurality of terminals may comprise at least three terminals, including: one terminal (e.g. in the form of a contact pad) for receiving a supply voltage (e.g. VDD), one terminal for receiving a reference voltage (e.g. GND), and one output terminal for providing an output signal. These terminals are exposed to the outside world. But of course the present invention is not limited to magnetic sensor devices having only three terminals, and sensor devices having more than three terminals, e.g. having at least four terminals, or at least six terminals, or at least eight terminals, may also be used.

In an embodiment, the processing circuit may comprise a programmable processor with a random-access memory (e.g. RAM) and a non-volatile memory (e.g. FLASH). The flash may contain at least one constant value, e.g. a scaling factor K for multiplying the at least one difference signal in order to obtain a torque value (e.g. expressed in Nm). But the present invention is not limited hereto, and may also provide an analog signal, e.g. a voltage signal, as an indication of the torque value. The difference may be determined in the analog domain.

In a simple embodiment, the sensor device has two "1D magnetic sensors" configured for measuring magnetic field components (e.g. Bz1, Bz2) oriented in a certain direction, at two sensor positions, spaced apart by said predefined distance (e.g. dx), and the processing circuit is configured for determining a difference between the two measured values, and for multiplying said difference by a predefined constant stored in a non-volatile memory embedded in the main substrate, and for outputting the result as a torque value (e.g. expressed in Nm).

The sensor substrates may comprise a Hall element and four contact zones. Two of these contact zones can be used for providing a voltage or a current to the Hall element, and two other of these contact zones can be used for readout.

In an embodiment, the magnetic sensor device is configured for measuring or estimating a first temperature of the first sensor, and a second temperature of the second sensor, and for temperature-compensating the signals obtained from the first and second sensor prior to calculating said difference.

In an embodiment, the first substrate further comprises a temperature sensor for measuring a temperature of the main substrate, and wherein the processing circuit is configured for temperature correcting the sensor signals before determining said difference, based on the measured temperature.

The temperature correction may be performed in the analogue domain or in the digital domain.

In an embodiment wherein the sensors comprise a single horizontal Hall plate, or multiple horizontal Hall plates connected in series or in parallel, the electrical resistance of the Hall plates may be used to estimate the individual hall plate temperatures. The electrical resistance may be determined during a calibration test, and stored in the non-volatile memory, or may be calculated during actual use, e.g. by applying a known biasing voltage and measuring the current flowing through the Hall plate(s), or by applying a known biasing current and measuring the voltage over the Hall plate(s). As an example, typically one or more pairs of hall plates are used to perform a differential measurement per pair. Then an average temperature reading can be used for temperature compensation of the differential measurement. This average temperature can be obtained from the temperature sensor on the CMOS substrate when the position of this temperature sensor is near the centre of the virtual circle intersecting the individual hall plates.

In an embodiment, each of the sensor substrates further comprises a temperature sensor for measuring a temperature of said sensor substrate, and the processing circuit is configured for temperature correcting the sensor signals before determining said difference, based on these temperature signals.

In some embodiments, the magnetic sensitive element itself (e.g. a Horizontal Hall plate) may be used as the temperature sensor. In this case, no additional contacts and no additional interconnections are needed between the sensor substrates and the first substrate.

In other embodiments, a separate temperature sensor circuit is provided on the sensor substrates, e.g. comprising a component with a Negative Temperature Coefficient (NTC). In this case additional contacts and additional interconnections may be needed between the sensor substrates and the first substrate.

In another or a further embodiment, the processing circuit is further configured for estimating a first amount of power consumed by the first sensor substrate, and a second amount of power consumed by the second sensor substrate, and for estimating a first temperature of the first sensor substrate based on the first amount of power, and for estimating a second temperature of the second sensor substrate based on a second amount of power, and for temperature-correcting the sensor signals before determining said difference, based on the respective temperature signals.

In an embodiment, the first semiconductor substrate comprises a plurality of first contact zones (e.g. first bondpads), and the second semiconductor substrate comprises a plurality of second contact zones, and the third semiconductor substrate comprises a plurality of first contact zones; and a first subset of the first contact zones are electrically connected (e.g. by means of bond wires or conductive tracks) to at least some of the second contact zones; and a second subset of the first contact zones are electrically connected to at least some of the third contact zones; and the first semiconductor substrate further comprises a first temperature sensor (T1) arranged in close vicinity of at least one contact zone from the first subset, and configured for providing a first temperature signal indicative of a temperature of the second substrate (i.e. the first sensor substrate); and the first semiconductor substrate further comprises a second temperature sensor (T2) arranged in close vicinity of at least one contact zone from the second subset, and configured for providing a second temperature signal indicative of a temperature of the third substrate (i.e. the second sensor substrate); and the processing circuit is further configured for temperature-compensating signals obtained from the first sensor (e.g. S1) using the first measured temperature, and for temperature-compensating signals obtained from the second sensor (e.g. S2) using the second measured temperature.

Since the first and the second magnetic sensor are not monolithically integrated, their temperatures may be quite different from each other, especially If they are spaced relatively far apart from each other. It is an advantage of estimating the temperature of the first and of the second semiconductor substrate by measuring a first and a second temperature on the main substrate at or near a contact zone that is electrically connected to the first or second sensor, because in practice the electrical connection is also a thermal connection (e.g. bond wire made of gold, or a copper wire inside a redistribution layer). It is an advantage of providing the thermal sensors on the first substrate because in this way the surface area (and thus also the cost) of the second and third substrate can be reduced, and the number of interconnections between the sensor substrates and the main substrate can also be reduced.

In an embodiment, the shaft comprises a steel or a steel alloy, and one or two axial sections of the shaft are magnetized in a circumferential direction.

In another or a further embodiment, the at least one axial section of the shaft comprises or consists of a magnetized ring mounted or wrapped around the shaft. The ring is attached to the shaft so that application of a torque to the shaft is transmitted to the ring. The ring can be made of the same material as the shaft, or can be made of a different material. It is an advantage of this embodiment that the ring can be chosen from a different material than the rest of the shaft, and that the magnetic field generated by it can be considerably larger. The outside diameter of the ring may be the same as the outside diameter of the shaft, or may be larger than the outside diameter of the shaft.

The first semiconductor substrate may be a CMOS substrate.

In an embodiment, the first semiconductor substrate mainly comprise silicon; and the second and third semiconductor substrate mainly comprise silicon.

In an embodiment, the first semiconductor substrate mainly comprise silicon; and the second and third semiconductor substrate are discrete (e.g. individual) silicon substrates.

This solution may be much more cost effective than integrating hall sensors in a CMOS chip since the price per unit area of a fan-out reconstituted wafer is much less than that of the wafer processing of the signal conditioning CMOS circuit, especially if the distance between the sensors is relatively large (e.g. larger than 2.0 mm).

The discrete silicon substrates may comprise Hall plates made with a dedicated fabrication process that is not compatible with standard CMOS processing, but provides better performance (e.g. higher sensitivity) than CMOS hall plates.

In an embodiment, the main substrate as well as the sensor substrates are made in CMOS technology, but using a different technology node.

In an embodiment, the main substrate is a CMOS silicon substrate, whereas the sensor substrates are bipolar silicon substrates.

In an embodiment, the main substrate may use a first type of sensor elements (e.g. horizontal Hall elements or vertical Hall elements), whereas the sensor substrates may use another type of sensor elements (e.g. magneto-resistive elements, e.g. AMR or XMR elements, or GMI sensors).

In an embodiment, the first semiconductor substrate mainly comprise silicon; and the second and third semiconductor substrate comprise a compound semiconductor material selected from the III-V-group, for example Ga-As or In-As.

This embodiment offers a combination of the following advantages: (1) magnetic sensors with a high sensitivity (e.g. about an order of magnitude larger than horizontal Hall sensors implemented in standard CMOS), (2) increased distance between the sensor elements, hence increased difference signal, (3) cost-effective package.

In an embodiment, the sensor device is a wafer-level packaged device; and the first semiconductor substrate is situated between the second and the third semiconductor substrate; and the first semiconductor substrate is electrically connected to the second semiconductor substrate and to the third semiconductor substrate by means of at least one redistribution layer (RDL).

In an embodiment, the main substrate is arranged relative to the sensor substrates such that a distance between the main semiconductor substrate and any of the sensor substrates is smaller than a distance between the two sensor substrates.

Preferably the active surfaces of the first, second and third semiconductor substrate are situated in a single virtual plane, or stated in other words, preferably the active surface of the first, second and third semiconductor substrate are substantially coplanar.

By situating the substrates next to each other, projections of the substrates in a direction perpendicular to the substrates do not overlap each other. This simplifies the routing of the interconnections.

It is an advantage of arranging the three substrates next to each other, because by doing so, the risk of one substrate exerting mechanical stress on another substrate can be reduced or avoided, e.g. as may be the case when they are mounted on top of each other, and one of the substrates expands e.g. due to thermal dissipation.

This embodiment offers a combination of the following advantages: (1) it allows heterogeneous integration; (2) allows an increased distance between the sensor elements independent of the size of the main substrate, hence the distance between the sensor elements can be optimized for a particular shaft; (3) cost-effective package; (4) allows to develop a "custom device" for a particular application (e.g. as a torque sensor for a particular shaft having one or more magnetized zones with particular dimensions, without redesign and testing and production of the CMOS substrate, which is only part of the wafer-level-package; (5) in case of chip-shortages of the sensor substrates, other sensor substrates can be used). In other words, this wafer-level package provides a great flexibility in the design, and allows to use and re-use existing substrates for various applications.

It is an advantage of using a good thermal conducting material (such as copper or aluminum) that the at least one redistribution layer (RDL) also serves as a heat spreader. In this way, a temperature difference between the main substrate and the sensor substrates is on the one hand limited, and on the other hand it makes possible that a temperature measured on the main substrate, (e.g. near a connection zone of this redistribution layer), can be used as an estimate or approximation of the temperature of the respective sensor substrate. If only one temperature sensor is provided on the main substrate, this temperature sensor is preferably located in a central location, e.g. in or near the middle between the two sensor locations.

In an embodiment, the wafer-level packaged device furthermore includes at least one passive SMD component, such as a resistor or a capacitor or a diode, e.g. for supressing noise and/or for stabilizing a voltage supply, and/or for reducing impact of EMI (electromagnetic interference).

This offers an important advantage that the sensitive circuits are better protected, even when the sensor device is not mounted on a printed circuit board. This also allows for a more compact mounting of the package in difficult environments, such as e.g. close to a shaft of an E-bike.

This wafer-packaged device may further comprise a plurality of terminals (also referred to herein as "external contacts"), electrically connected to the first substrate (e.g. to contact zones or bondpads thereof) by means of said redistribution layer(s).

In other words, the electrical connections from the sensor substrates to the main substrate, and from the main substrate to the external terminals, are formed in said RDL layer(s).

A projection of the external terminals in a direction perpendicular to the active surfaces of the substrates may be situated on the main substrate (so called "fan-in"), or may be located outside the periphery of the main substrate ("fan-out").

Preferably a projection of the (external) terminals is not located on the sensor substrates for reasons of stress due to soldering. Some of the terminals may be situated near the corners of the package. External devices can be connected to these terminals by means of wire bonding or soldering or the like.

It is an advantage that the external terminals are in direct contact with the RDL layer, which allows them to be produced using photolithographic processes. This is not the case when using a lead frame.

It is an advantage that the active surfaces of the three substrates are located in a same (virtual) plane (i.e. they are coplanar), even if the substrates have different thicknesses. This makes it possible to mount the three substrates at a same distance from an external object, e.g. a shaft, a magnet surface, etc. This also allows that many or all of the vias of the redistribution RDL layer have substantially the same length (in a direction perpendicular to the substrates).

In an embodiment, the number of redistribution layers is only one or only two.

This offers the advantage of a cheaper and a thinner package, and avoids the need for a complex three-dimensional redistribution layer stack.

In an embodiment, the magnetic sensor device further comprises a lead frame; and the first substrate is situated between the second and the third semiconductor substrate on a single side of the lead frame; and the first semiconductor substrate is electrically connected to the second semiconductor substrate and to the third semiconductor substrate by means of bond wires. (e.g. directly connected, or indirectly connected, via the lead frame).

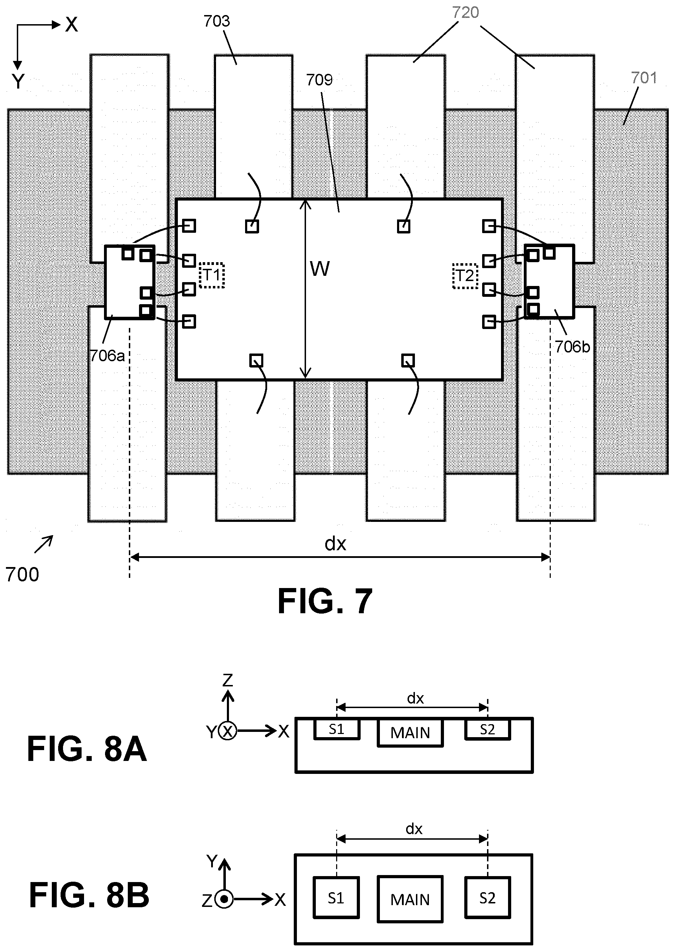

An examples of such a sensor device is illustrated in FIG. 7.

It is an advantage of arranging the three substrates next to each other. By doing so, the risk of one substrate exerting mechanical stress on another substrate can be avoided, e.g. as will be the case when they are mounted on top of each other, and one of the substrates expands e.g. due to thermal dissipation.

Preferably, the electrical interconnections between the first semiconductor substrate and the sensor substrates are internal in the package, i.e. are not exposed, and thus are not accessible from outside the package. Some contact zones (or bondpads) of the first semiconductor substrate are electrically connected to external leads (e.g. for receiving a supply voltage signal VDD, a reference voltage signal GND, and for outputting the torque signal or a signal or value indicative of the torque).

In an embodiment, the lead frame furthermore includes at least one passive SMD component, such as a resistor or a capacitor or a diode, e.g. for supressing noise and/or for stabilizing a voltage supply, and/or for reducing impact of EMI (electromagnetic interference).

This offers an important advantage that the sensitive circuits are better protected, even when the sensor device is not mounted on a printed circuit board. This also allows for a more compact mounting of the package in difficult environments, such as e.g. close to a shaft of an E-bike.

In an embodiment, the magnetic sensor device further comprises a lead frame; and the first semiconductor substrate is mounted to the leadframe, and the second semiconductor substrate and the third semiconductor substrate are arranged on top of or underneath the first substrate; and the first semiconductor substrate is electrically connected to the second semiconductor substrate and to the third semiconductor substrate by means of bond wires. (e.g. directly connected, or indirectly connected, via the lead frame).

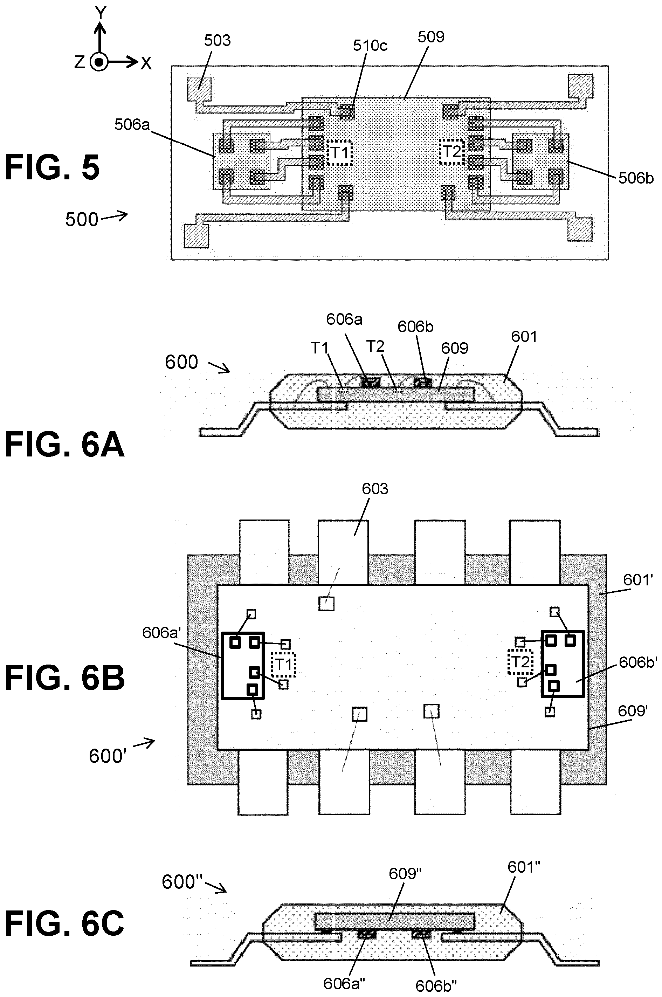

Examples of such a sensor device are illustrated in FIG. 6A to FIG. 6C.

Preferably, the electrical interconnections between the first semiconductor substrate and the sensor substrates are internal in the package, i.e. are not exposed, and thus are not accessible from outside the package. Some contact zones (or bondpads) of the first semiconductor substrate are electrically connected to external leads (e.g. for receiving a supply voltage signal VDD, a reference voltage signal GND, and for outputting a signal indicative of the torque, e.g. the torque signal).

In an embodiment, the shaft comprises at least a first axial section magnetized in a first circumferential direction, and optionally also a second axial section magnetized in a second circumferential direction opposite the first circumferential direction; and the magnetic sensor device is oriented relative to the shaft such that a first axis (e.g. X) defined by a virtual line passing through the first sensor and the second sensor is parallel to the shaft; and the first sensor and the second sensor are configured for measuring a first and a second magnetic field component oriented parallel to the shaft; and the first sensor is situated at a first axial position near a middle of the first magnetized axial section, and wherein the second sensor is situated near a middle of the second magnetized axial section if present.

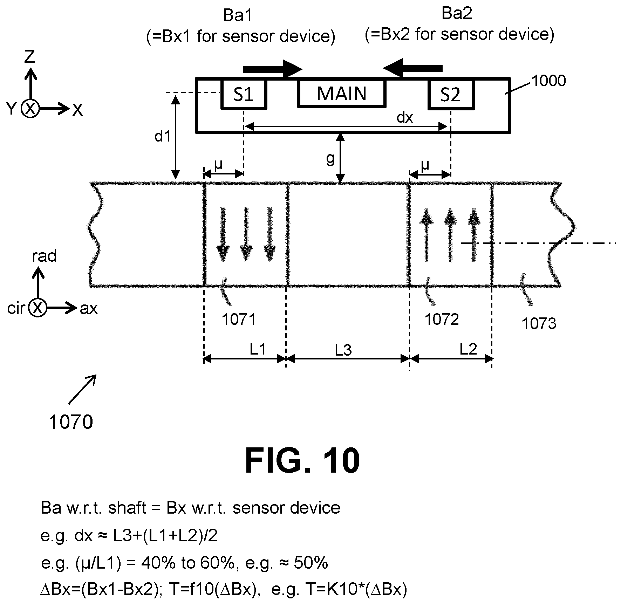

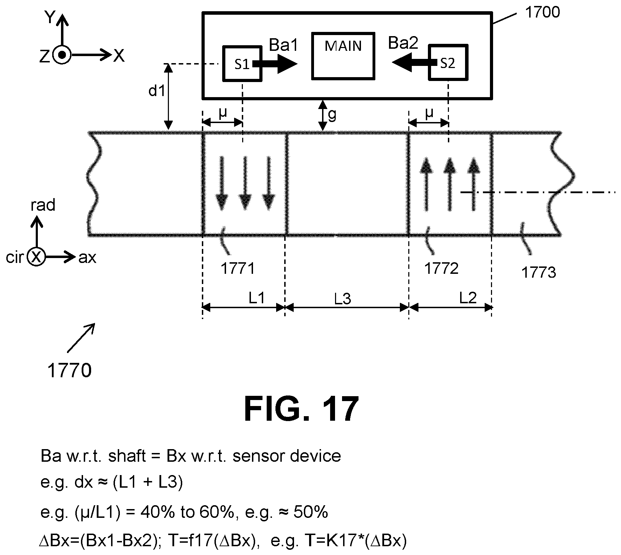

Examples of this embodiment are illustrated in FIG. 10 and FIG. 17.

The sensor device may be configured for determining the torque based on a difference (e.g. ΔBx) between the first and the second magnetic field component, e.g. proportional to said difference.

The shaft preferably contains two axial sections magnetized in opposite circumferential directions, but that is not absolutely required, and one of these axial sections can be omitted.

In an embodiment, the magnetic sensor device is oriented relative to the shaft such that a first axis (e.g. X) defined by a virtual line passing through the first sensor and the second sensor is radially oriented with respect to the shaft; and the first sensor and the second sensor are configured for measuring a first and a second magnetic field component oriented parallel to the shaft; and the first sensor is situated at an axial position near a middle of the magnetized axial section at a first radial distance (e.g. d1) from the shaft, and wherein the second sensor is situated at the same axial position as the first sensor but at a second radial distance (e.g. d2) from the shaft, larger than the first axial distance.

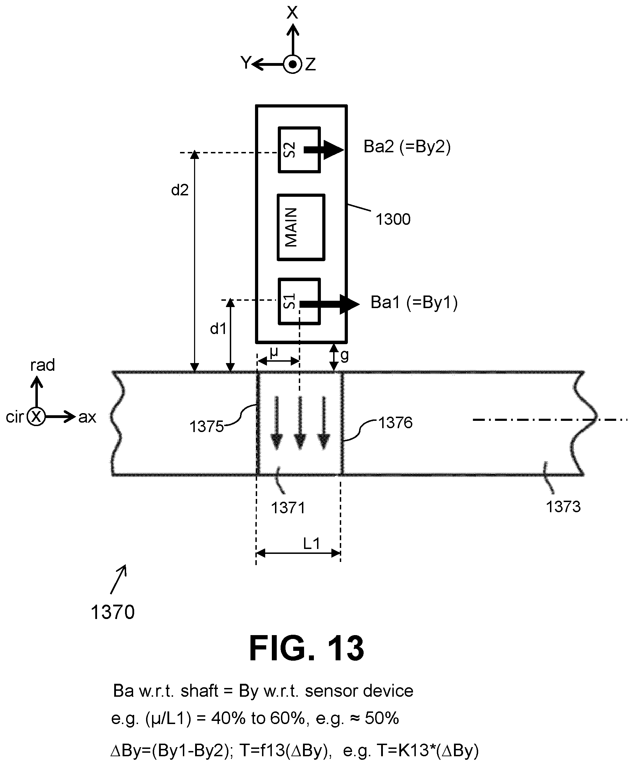

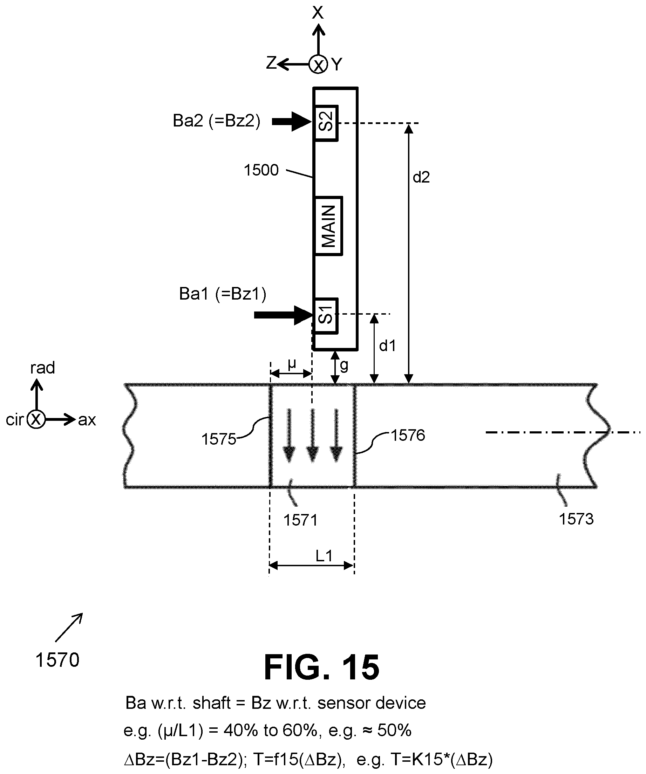

Examples of this embodiment are illustrated in FIG. 13 and FIG. 15.

The sensor device may be configured for determining the torque based on a difference (e.g. ΔBax) between the first and the second magnetic field component, e.g. proportional to said difference.

Depending on the orientation of the sensor device, the axial component Bax relative to the shaft corresponds to a component By (FIG. 13) or a component Bz (FIG. 15) of the sensor device.

In an embodiment, the magnetic sensor device is oriented relative to the shaft such that a first axis (e.g. X) defined by a virtual line passing through the first sensor and the second sensor is parallel to the shaft; and the first sensor and the second sensor are configured for measuring a first and a second magnetic field component radially oriented with respect to the shaft; and the first sensor is situated at a first axial position near a first edge of the magnetized axial section, and the second sensor is situated at a second axial position near a second edge of the magnetized axial section.

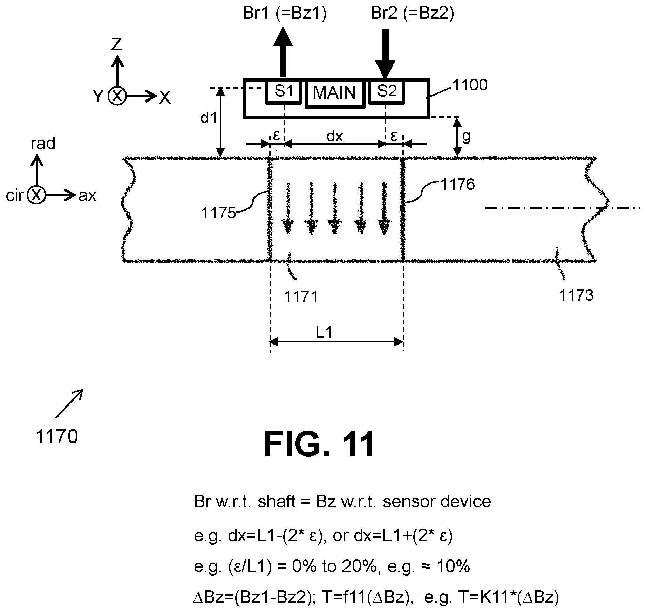

An example of this embodiment is illustrated in FIG. 11.

The sensor device may be configured for determining the torque based on a difference (e.g. ΔBz) between the first and the second magnetic field component, e.g. proportional to said difference.

In an embodiment, the magnetic sensor device is oriented relative to the shaft such that a first axis (e.g. X) defined by a virtual line passing through the first sensor and the second sensor is radially oriented with respect to the shaft; and the first sensor and the second sensor are configured for measuring a first and a second magnetic field component radially oriented with respect to the shaft; and the first and the second sensor are situated at an axial position near a first edge of the magnetized axial section.

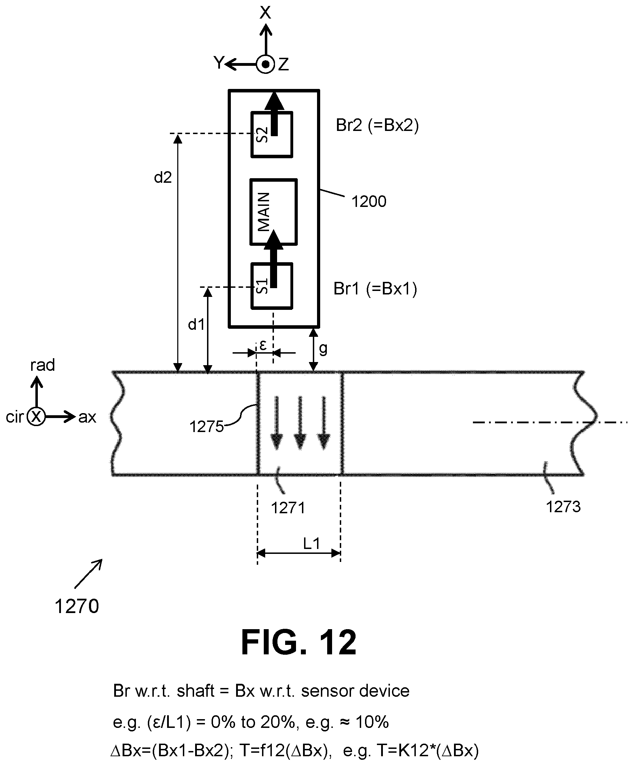

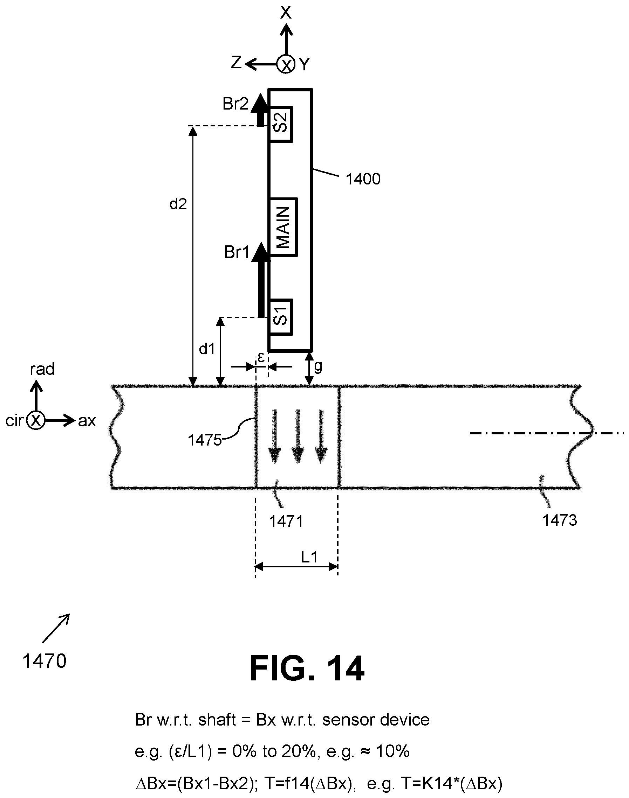

An example of this embodiment is illustrated in FIG. 12 and FIG. 14.

The sensor device may be configured for determining the torque based on a difference (e.g. ΔBx) between the first and the second magnetic field component, e.g. proportional to said difference.

In an embodiment, the shaft comprises at least a first axial section magnetized in a first circumferential direction, and optionally also a second axial section magnetized in a second circumferential direction opposite the first circumferential direction; and the magnetic sensor device is oriented relative to the shaft such that a first axis (e.g. X) defined by a virtual line passing through the first sensor and the second sensor is parallel to the shaft; and the first sensor and the second sensor are configured for measuring a first and a second magnetic field component radially oriented with respect to the shaft; and the first sensor is situated at a first axial position near an edge of the first magnetized axial section, and wherein the second sensor is situated near an edge of the second magnetized axial section if present.

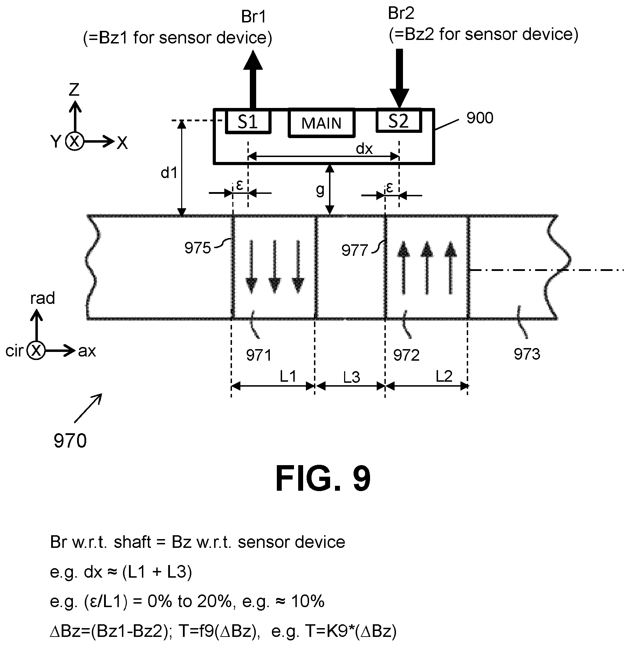

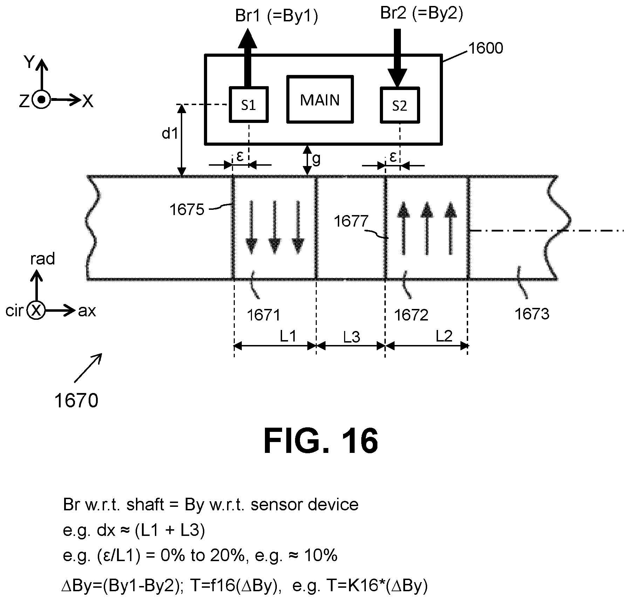

Examples of this embodiment are illustrated in FIG. 9 and FIG. 16.

Depending on the orientation of the sensor device, the radial component Br relative to the shaft corresponds to a component Bz (FIG. 9) or a component By (FIG. 16) of the sensor device.

The shaft preferably contains two axial sections magnetized in opposite circumferential directions, but that is not absolutely required, and one of these axial sections can be omitted.

In an embodiment, the shaft comprises a first axial section magnetized in a first circumferential direction, and a second axial section also magnetized in the first circumferential direction; and the magnetic sensor device is oriented relative to the shaft such that a first axis (e.g. X) defined by a virtual line passing through the first sensor and the second sensor is parallel to the shaft; and the first sensor and the second sensor are configured for measuring a first and a second magnetic field component radially oriented with respect to the shaft; and the first sensor and the second sensor are either both situated near inner edges of the respective axial sections, or are either both situated near outer edges of the respective axial sections.

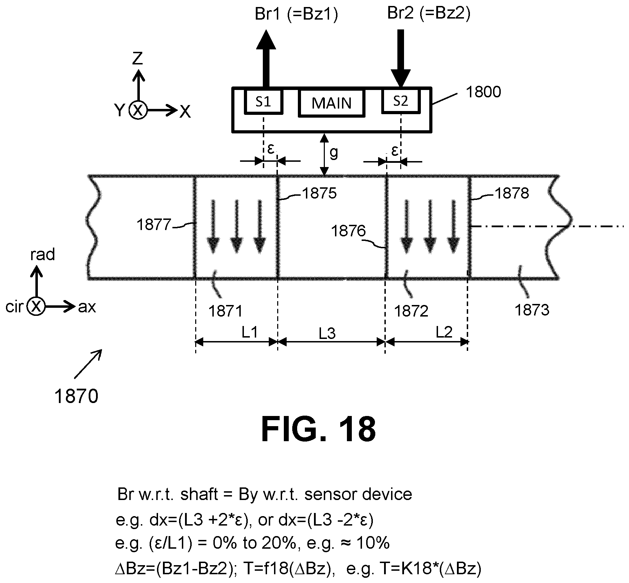

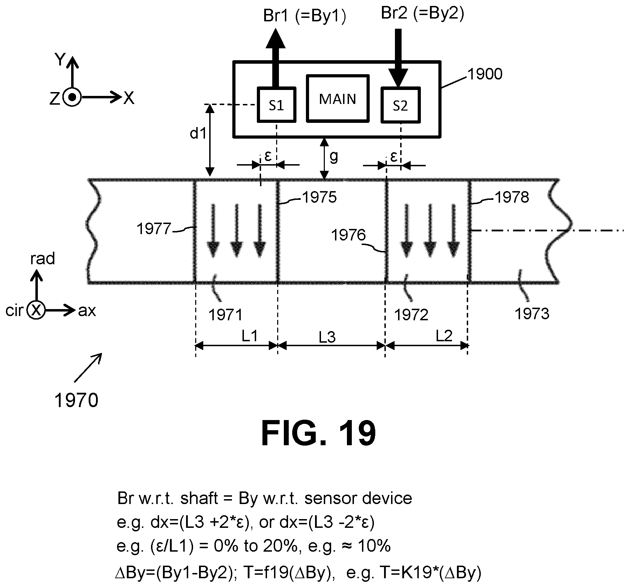

Examples of this embodiment are illustrated in FIG. 18 and FIG. 19.

Depending on the orientation of the sensor device, the radial component Br relative to the shaft corresponds to a component Bz (FIG. 18) or a component By (FIG. 19) of the sensor device.

According to a second aspect, the present invention also provides a method of measuring a torque exerted upon a shaft, comprising the steps of: a) providing a shaft comprising at least one (e.g. a first) axial section, that is magnetized in a (e.g. first) circumferential direction; b) providing a magnetic sensor device in the form of a single packaged device comprising at least three semiconductor substrates, including: a first semiconductor substrate (e.g. CMOS) comprising at least a processing circuit; a second semiconductor substrate (e.g. Ga-As) comprising a first magnetic sensor; and a third semiconductor substrate (e.g. Ga-As) comprising a second magnetic sensor; c) arranging the sensor device in the vicinity of the shaft; d) measuring a first magnetic field component (e.g. Bz1) using the first magnetic sensor; and measuring a second magnetic field component (e.g. Bz2) using the second magnetic sensor; e) determining a pairwise difference (e.g. ΔBz) between the magnetic field components; f) outputting a signal or a value indicative of a torque exerted upon said shaft, based on said pairwise difference.

Step a) may comprise: providing a shaft with only one axial section that is magnetized in a circumferential direction.

Step a) may comprise: providing a shaft with only two axial sections, which are magnetized in opposite circumferential directions, and with a non-magnetized section in between.

Step a) may comprise: providing a shaft with three axial sections, which are magnetized in opposite circumferential directions (i.e. not all magnetized in the same direction), and with two non-magnetized sections in between.

Step b) may comprise: providing such a device wherein the two magnetic sensors are spaced apart along a first direction (X) by a predefined distance (e.g. dx) in the range from 1.5 mm to 25.0 mm, or from 2.5 to 25.0 mm, or from 4.0 to 25.0 mm, or from 6.0 mm to 25 mm, or from 8.0 mm to 25 mm, or from 10 mm to 25 mm, or from 12 mm to 25 mm.

Step b) may comprise: providing such a device wherein each of the two magnetic sensors is a 1D magnetic pixel, e.g. comprising only horizontal Hall elements.

Step c) may comprise: arranging the sensor device such that the first sensor (e.g. S1) is positioned at an axial position near a center of the first magnetized zone.

Step c) may comprise: arranging the sensor device such that the first sensor (e.g. S1) is positioned at an axial position near an edge of the first magnetized zone (e.g. at an axial distance of at most 3.0 mm from said edge.

Step c) may comprise: orienting the sensor device such that a virtual axis (e.g. X) between the first and second sensor is oriented substantially parallel to the longitudinal axis of the shaft.

Step c) may comprise: orienting the sensor device such that a virtual axis (e.g. X) between the first and second sensor is oriented substantially orthogonal to the longitudinal axis of the shaft, e.g. radially.

Step f) may comprise: outputting a voltage proportional to said pairwise difference, or outputting a digital value proportional to said pairwise difference.

Step f) may comprise: calculating and outputting a torque value (e.g. T) based on said pairwise difference.

If the shaft has two axial sections which are circumferentially magnetized, and if the imaginary axis (X) between the two sensors is substantially parallel to the longitudinal axis of the shaft, the second sensor may be arranged in the vicinity of the second axial section.

In an embodiment, the first substrate further comprises a temperature sensor (e.g. near a central position of the first substrate), and step d) further comprises: measuring a temperature of the first substrate, and temperature-compensating the measured values of the first and second sensor, using the measured temperature of the first substrate as an estimate of the temperature of the first and second sensor substrate.

In an embodiment, the first substrate further comprises two temperature sensors, e.g. a first temperature sensor situated near contact zones that are connected to contact zones of the first sensor substrate and a second temperature sensor situated near contact zones that are connected to contact zones of the second sensor substrate, and step d) further comprises: measuring a first temperature by the first temperature sensor, and temperature-compensating the measured values of the first sensor using the first temperature; and measuring a second temperature by the second temperature sensor, and temperature-compensating the measured values of the second sensor using the second temperature.

According to a third aspect, the present invention also provides a magnetoelastic torque sensor system, comprising: a shaft comprising a first, a second and a third axial section, magnetized in a first, a second and a third circumferential direction respectively, the second axial section being located between the first and the third axial section, the third circumferential direction being equal to the first circumferential direction (e.g. clockwise), the second circumferential direction being opposite the first circumferential direction (e.g. counter-clockwise); and at least one magnetic sensor device arranged in the vicinity of the shaft, and comprising three semiconductor substrates, including a first semiconductor substrate comprising at least a processing circuit, a second semiconductor substrate comprising a first magnetic sensor, and a third semiconductor substrate comprising a second magnetic sensor, each magnetic sensor being configured for measuring a magnetic field component (e.g. Bz1, Bz2) of a magnetic field generated by said shaft when a torque is exerted on the shaft; wherein the first and the second magnetic sensor are spaced apart from each other by a predefined distance (e.g. dx); wherein the processing circuit is configured for determining a pairwise difference (e.g. ΔBz) between the measured field components, and for outputting said pairwise difference, and/or a signal or a value indicative of a torque exerted upon said shaft, based on said pairwise difference.

In a variant, the torque sensor system according to the third aspect further comprises a processor (e.g. an electronic control unit) situated outside of the magnetic sensor device, in which case the main substrate of the sensor device may be omitted; or the main substrate may be present, and may be configured to bias and read-out the sensors, and output the sensor signals, optionally after temperature correction, but the pairwise difference may be calculated in the external processor.

In an embodiment, the first semiconductor substrate is a CMOS substrate; and the second and the third semiconductor substrate comprise a compound semiconductor material selected from the III-V-group, for example Ga-As or In-As.

In an embodiment, the first and the second sensor are configured for measuring magnetic field components oriented in a radial direction of the shaft.

In an embodiment, the first and the second sensor are configured for measuring magnetic field components oriented in an axial direction of the shaft.

In an embodiment, the first and the second sensor are configured for measuring two orthogonal magnetic field components, one oriented in a radial direction of the shaft and one oriented in an axial direction of the shaft.

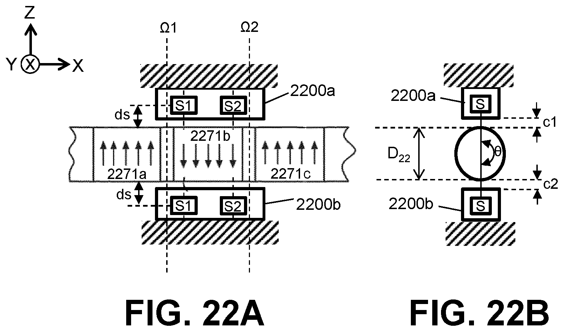

In an embodiment, the first sensor and the second sensor are situated in a space between a first virtual plane (e.g. Ω1 of FIG. 22A) and a second virtual plane (e.g. Ω2), the first virtual plane oriented perpendicular to the axial direction (e.g. X) of the shaft and intersecting the shaft at a first axial position situated between the first and the second magnetized section, the second virtual plane oriented perpendicular to the axial direction of the shaft and intersecting the shaft at a second axial position situated between the second and the third magnetized section.

In an embodiment, the first, second and third semiconductor substrates are incorporated in a single module or in a single packaged device.

In an embodiment, the distance dA between the first and the second axial zone is substantially equal to the distance dB between the second and the third axial zone (e.g. within a tolerance margin of ±25%); and the radial distance ds between the shaft and the first and second sensor is substantially equal to said distance dA (e.g. within a tolerance margin of ±25%), and the distance dx between the first sensor and the second sensor is a value in the range from (L2-2*dA) and (L2+dA), where L2 is the axial length of the second magnetized zone. Preferably dx is a value in the range from (L2 - 2*dA) to (L2), or a value in the range from (L2-1.5*dA) to (L2-0.5*dA), or in the range from (L2-1.25*dA) to (L2-0.75*dA), for example dx substantially equal to (L2-dA).

In an embodiment, the sensor system comprises two magnetic sensor devices mounted in the vicinity of the shaft, e.g. between said first and second virtual plane, and being circumferentially spaced by an angle (e.g. θ) of at least 30°, or at least 45°, or at least 60°, or at least 70°, or at least 85°, or at least 95°, e.g. by an angle in the range from 165° to 180°. Signals from these two magnetic sensor devices may be combined by one of the magnetic sensor devices, or by an external processor, to determine a value of the torque exerted upon the shaft.

In an embodiment, the sensor system comprises three magnetic sensor devices mounted in the vicinity of the shaft, e.g. between said first and second virtual plane, and being circumferentially spaced by an angle (e.g. θ) of at least 30°, or at least 45°, or at least 60°, or at least 70°, or at least 85°, or at least 95°, e.g. by an angle in the range from 105° to 135°. Signals from these three magnetic sensor devices may be combined by one of the magnetic sensor devices, or by an external processor, to determine a value of the torque exerted upon the shaft.

In an embodiment, the sensor system comprises four magnetic sensor devices mounted in the vicinity of the shaft, e.g. between said first and second virtual plane, and being circumferentially spaced by an angle (e.g. θ) of at least 30°, or at least 45°, or at least 60°, or at least 70°, or at least 85°, or at least 95°, e.g. by an angle in the range from 80° to 100°. Signals from these four magnetic sensor devices may be combined by one of the magnetic sensor devices, or by an external processor, to determine a value of the torque exerted upon the shaft.

Particular and preferred aspects of the invention are set out in the accompanying independent and dependent claims. Features from the dependent claims may be combined with features of the independent claims and with features of other dependent claims as appropriate and not merely as explicitly set out in the claims. These and other aspects of the invention will be apparent from and elucidated with reference to the embodiment(s) described hereinafter.

### Brief description of the drawings

**FIG. 1A** and **FIG. 1B** show an illustrative example of a magnetic sensor device as can be used in embodiments of the present invention. **FIG. 1A** is a top view and **FIG. 1B** is a cross-sectional view of the magnetic sensor device of FIG. 1A along the line A-A.
**FIG. 2** is a functional block-diagram of the magnetic sensor device of FIG. 1A and FIG. 1B.
**FIG.** 3 shows a flow-chart of a method of producing a magnetic sensor device like the one shown in FIG. 1A and FIG. 1B.
**FIG. 4(a) to FIG. 4(j)** illustrate in more detail various steps of a method that may be used to produce a magnetic sensor device like the one shown in FIG. 1A and FIG. 1B.
**FIG.** 5 shows an example of a variant of the magnetic sensor device of FIG. 1A, having only four terminals, as can be used in embodiment of the present invention.
**FIG. 6A to FIG. 6C** show examples of other magnetic sensor devices that can be used in embodiments of the present invention. These sensor devices comprise: a lead frame, a first (main) semiconductor substrate mounted on the lead frame, and two sensor substrates mounted on top of or below the first semiconductor substrate.
**FIG. 7** shows an example of another magnetic sensor device that can be used in embodiments of the present invention. This sensor device comprises: a lead frame, a first semiconductor substrate mounted on the lead frame, and two sensor substrates also directly mounted on the lead frame, in a way such that the first semiconductor substrate is situated between the two sensor substrates.
**FIG. 8A and FIG. 8B** are abstract representations of magnetic sensor devices as can be used in torque sensor systems described in FIG. 9 to FIG. 19, to represent magnetic sensor devices like any of the ones shown in FIG. 5 to FIG. 7 and variants thereof, and to show the relative position and orientation relative to the shaft. FIG. 8A is a cross-sectional side-view, and FIG. 8B is a schematic top view.
**FIG. 9** to **FIG. 19** show illustrative examples of magnetoelastic torque sensor systems proposed by the present invention, using a single packaged sensor device comprising three semiconductor substrates, e.g. as described in FIG. 1 to FIG. 7 or variants thereof.
**FIG. 20** shows an illustrative example of magnetoelastic torque sensor systems proposed by the present invention, comprising a shaft having three magnetized zones, and a magnetic sensor device comprising two sensor substrates and optionally also a processing circuit.
**FIG. 21** shows simulation results for a torque sensor system like that of FIG. 20.
**FIG. 22A** shows a side view, and **FIG. 22B** shows a front view of a torque sensor system like that of FIG. 20, having two magnetic sensor devices, angularly spaced in a circumferential direction by 180°.
**FIG. 23** shows a flow-chart of a method of determining a torque exerted upon a shaft, according to an embodiment of the present invention, e.g. as may be used in an arrangement as illustrated in FIG. 9 to FIG. 19.
**FIG. 24** shows a flow chart of a method of determining a torque exerted upon a shaft having three magnetized zones, according to an embodiment of the present invention, e.g. as may be used in an arrangement as illustrated in FIG. 20 to FIG. 22B.

The drawings are only schematic and are non-limiting. In the drawings, the size of some of the elements may be exaggerated and not drawn on scale for illustrative purposes. Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

The terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In this document, the abbreviation "RDL" means "Redistribution Layer(s)".

In this document, the abbreviation "IMC" means "Integrated Magnetic Concentrator".

In this document, the abbreviation "SNR" means "Signal to Noise Ratio".

In this document, the abbreviation "MR element" means "Magneto-Resistive element".

In this document, the term "magnetic sensor device" or "sensor device" refers to a device comprising three semiconductor substrates integrated in a single package, e.g. arranged next to each other, or on top of each other.

In this document, the expression "axial section of a shaft" and "axial zone of a shaft" mean the same, and are interchangeable.

Embodiments of the present invention may be described using a Cartesian coordinate system which is fixed to the sensor device, and having three axes X, Y, Z, where the X and Y axis are parallel to the substrate, and the Z-axis is perpendicular to the substrate. The X-axis may be defined by the first and second sensor location. Embodiments of the present invention may also be described using a polar coordinate system relative to a shaft. This coordinate system defines an axial, a radial and a circumferential orientation with respect to the shaft. A correspondence between the coordinate systems depends on a relative orientation of the sensor device relative to the shaft.

In this document, the expression that "a substrate mainly comprises silicon" means that at least 50% of the atoms of the substrate are Si atoms. Examples of such substrates are: a Silicon substrate, a Silicon-on-insulator Sol substrate, a bipolar Si substrate, a CMOS substrate.

In this document, the expression "a sensor is arranged near an edge of the magnetized zone" or "a sensor is arranged in the vicinity of the edge" means that the sensor is situated closer to said edge than to a virtual circle in the middle between the two edges of said zone", unless clear from the context that something else was meant.

The present invention relates to the field of magnetoelastic torque sensors. Such a magnetoelastic torque sensor is based on a reversal of the physical effect of magnetostriction (deformation of magnetic materials by means of an applied magnetic field), wherein a torque, which impacts on the magnetized shaft, causes a torsion of the shaft and as a consequence a modification of the magnetic field outside of the shaft. This modification is very sensitive with regard to the extent of the torque and can be measured with a magnetic field sensor device.

Such magnetoelastic torque sensors may be used for example in E-bikes, automotive applications, industrial applications, robotic applications, etc. A typical requirement is that the torque sensor has a good accuracy, despite the fact that the shaft may generate only a relatively weak magnetic field (e.g. having a magnetic field strength smaller than 10 mT, or smaller than 3 mT, or smaller than 1 mT), even in the presence of a magnetic disturbance field. Various geometric arrangements will be proposed, because of the diversity of applications in which the torque sensor may be used.

In FIG. 9 to FIG. 19 various torque sensor systems proposed by the present invention, will be described. These torque sensor systems comprise a shaft and a magnetic sensor device comprising two magnetic sensors.

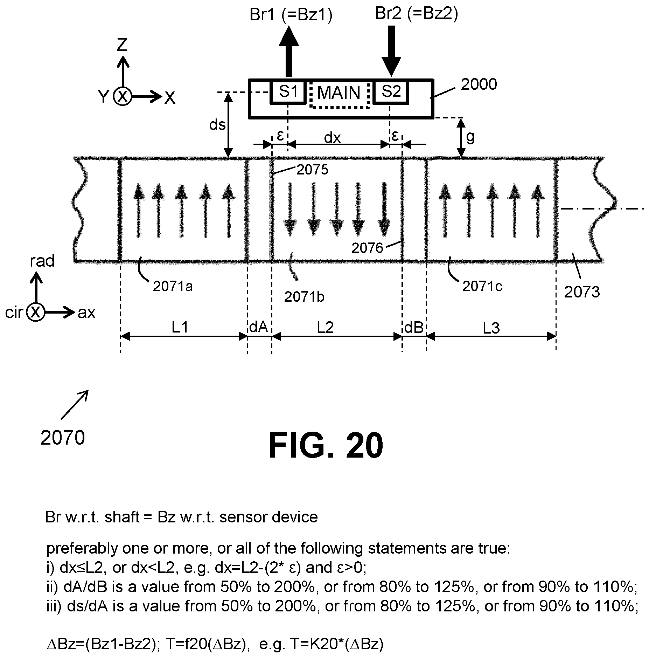

Various shafts can be used. The shaft has at least one axial zone which is magnetized in a circumferential direction. In some embodiments (e.g. as illustrated in FIG. 11 to FIG. 15) the shaft has only one axial zone that is magnetized in a circumferential direction. In other embodiments the shaft has two axial zones that are magnetized in opposite circumferential directions. In yet other embodiments (e.g. as illustrated in FIG. 18 and FIG. 19), the shaft has two axial zones that are magnetized in the same circumferential direction. In yet other embodiments (e.g. as illustrated in FIG. 20 to FIG. 22B, the shaft has three axial zones which are magnetized in alternating circumferential directions.

Various magnetic sensors devices can be used. The magnetic sensor devices comprise two magnetic sensors S1, S2 which are spaced apart over a predefined distance dx. This distance dx may be matched to dimensions of the one or more axial zones of the shaft.

Magnetoelastic torque sensors comprising a shaft and a sensor device are known already more than 20 years. Over these 20 years, the dimensions of the shaft (for a particular application) have hardly changed, but the dimensions of the electronics, in particular electronics implemented in CMOS technology, has changed dramatically. In particular, it has become possible, over the years to integrate magnetic sensors and digital storage and digital processing circuitry on a single semiconductor die, and to decrease the size of such a die to dimensions smaller than about 2.0 mm x 2.0 mm. While such a high level of integration and miniaturization is highly desirable in certain technical fields, it does not automatically result in a good solution in the field of magnetoelastic torque sensors. Indeed, the magnetic field generated by the magnetoelastic effect is relatively weak (e.g. the magnetic field strength generated by such a shaft is typically smaller than 10 mT, or smaller than 3 mT, or smaller than 1 mT).

It is a challenge to provide a cost-effective solution (a very important criterium for high-volume and highly competitive markets such as the automotive and/or E-bike industry), which is easy to mount relative to a shaft, which is highly insensitive to an external disturbance field, and that provides a good accuracy, and preferably all of these.

Solutions proposed by the present invention are novel because they make use of novel sensor devices, or because they make use of novel arrangements of the sensor device relative to the shaft, or both. Alternatively or additionally, the distance dx between the sensor elements may be chosen such that the resulting accuracy of the measured torque signal is relatively high (e.g. has a good signal-to-noise ratio SNR), while the mounting requirements (e.g. axially and/or radially) are relatively low.

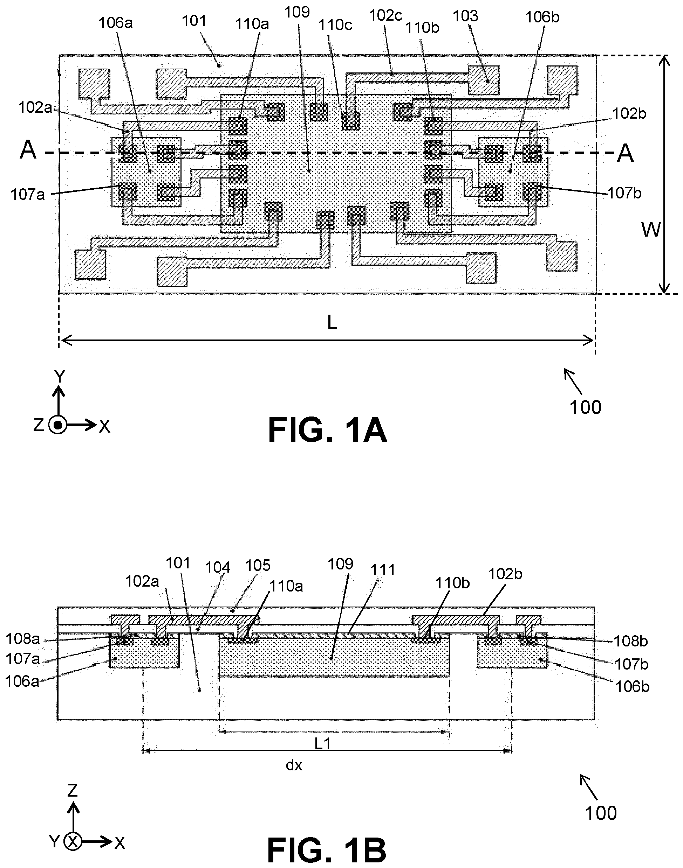

**FIG. 1 to FIG. 7** will describe illustrative examples of sensor devices as can be used in torque sensor systems proposed by the present invention. **FIG. 8A and FIG. 8B** are an abstract representation of such sensor devices, and **FIG. 9 to FIG. 19** will describe magnetoelastic torque sensor systems proposed by the present invention, wherein such a sensor device is arranged in a particular way relative to one or two magnetized zones of a shaft.

The present invention provides a magnetoelastic torque sensor system comprising a shaft, and a magnetic sensor device arranged in the vicinity of the shaft. The shaft comprises at least one axial section that is magnetized in a circumferential direction. The magnetic sensor device comprises three semiconductor substrates, including a first semiconductor substrate (e.g. a CMOS substrate, referred to herein as "MAIN") comprising at least a processing circuit, a second semiconductor substrate (e.g. a GaAs substrate) comprising at least a first magnetic sensor S1, and a third semiconductor substrate (e.g. a GaAs substrate) comprising at least a second magnetic sensor S2. Each magnetic sensor is configured for measuring a magnetic field component (e.g. Bx1, Bx2) of a magnetic field generated by said shaft when a torque is exerted on the shaft. The first, second and third substrate are incorporated in a single packaged device. The first and the second magnetic sensor are spaced apart from each other by a predefined distance (e.g. in the order of about 1.5 mm to 25.0 mm). The processing circuit is configured for determining a pairwise difference between the measured field components, and for outputting a signal or a value indicative of (e.g. substantially proportional to) the torque exerted upon the shaft.

It is an advantage that this sensor device is provided as a single package, because this guarantees a precise distance between the sensor locations, and because this simplifies mounting of the packaged device relative to the shaft, rather than mounting individual sensors.

It is a major advantage that the sensor device comprises at least three individual semiconductor substrates because these can be manufactured separately, e.g. using different materials and/or using different technologies or processes, and/or using different "technology-scaling". This allows for example to combine a processing circuit implemented in one material and/or in one technology node, and sensors implemented in another material and/or in another technology node. This also allows for example to combine a processing circuit implemented in CMOS technology, and sensors implemented in GaAs or InAs or another compound semiconductor material selected from the III-V-group. Such sensors have a magnetic sensitivity which is typically much higher than that of a CMOS sensor.

It is a major advantage of this device that it allows one substrate to be "shrinked" (e.g. the processing substrate) without necessarily having to modify the position and/or the size of the sensors, which would be the case if they were integrated on the same semiconductor substrate as the processing circuit.

Various magnetic sensor devices can be used, for example:
(a) a wafer-level packaged device, as will be described in more detail in FIG. 1A to FIG. 5; or
(b) magnetic sensor devices where the sensor substrates are stacked on top of, or underneath the first substrate, the latter being mounted on a lead frame, e.g. as illustrated in FIG. 6A to FIG. 6C; or
(c) magnetic sensor devices comprising a lead frame, wherein each of the first, second and third substrate are mounted directly on the lead frame, e.g. as illustrated in FIG. 7;
or variants of (a) or (b) or (c).

Various shafts, and various arrangements of the sensor device relative to the shaft are proposed by the present invention, e.g. as illustrated in FIG. 9 to FIG. 19.

Referring now to the Figures.

**FIG. 1A** and **FIG. 1B** show an illustrative example of a magnetic sensor device 100. **FIG. 1A** shows a planar view and **FIG. 1B** shows a cross-sectional view of the magnetic sensor device of FIG. 1A along the line A-A.

The device 100 contains three discrete semiconductor substrates: a first substrate 109, also referred to herein as the "main substrate", and two sensor substrates 106a, 106b. The sensor substrates each comprise a magnetic sensor (not explicitly shown).

The three substrates are surrounded by and held in place by means of a moulding compound 101, e.g. an epoxy, but the present invention is not limited hereto.

In order to keep the description simple, it will be assumed that each sensor is a single horizontal Hall element, but of course, the present invention is not limited thereto, and may comprise other magnetic sensors, or two connected horizontal Hall elements, or a plurality of Hall elements connected in series or in parallel, optionally with IMC, or one or more vertical Hall elements, or a Wheatstone bridge with at least one MR element, etc. As is well known in the art, a Horizontal Hall element typically has two "excitation nodes" where a voltage or a current is applied, and two "output nodes" where an output signal, e.g. an output voltage can be measured, thus requiring four contacts in total. Likewise, a Wheatstone bridge also has two excitation nodes and two output nodes, and thus also requires four contacts. Other magnetic sensors (e.g. an IMC with two horizontal Hall elements) may have more than four contacts, as is known in the art. In the example of FIG. 1A, the sensor substrate 106a has four contacts, e.g. in the form of bondpads 107a, and the sensor substrate 106b has four contacts, e.g. in the form of bondpads 107b. Of course, in other embodiments, the number of contacts may be more than four, or less than four, e.g. three.

The four contacts 107a of the first sensor substrate 106a are electrically connected with four contacts 110a of the main substrate 109 by means of four electrical interconnections 102a implemented in one or more redistribution layers (RDL), also referred to herein as "RDL stack". Likewise, the four contacts 107b of the second sensor substrate 106b are electrically connected with four contacts 110b of the main substrate 109 by means of four electrical interconnections 102b implemented in said one or more RDL layers. In the case of a horizontal Hall element, the main substrate 109 may provide a biasing voltage or a biasing current over two of these contacts, and may read the sensor signal over the other two contacts. But of course, a more complex biasing and readout scheme may also be used, e.g. using the so called spin-current technique.

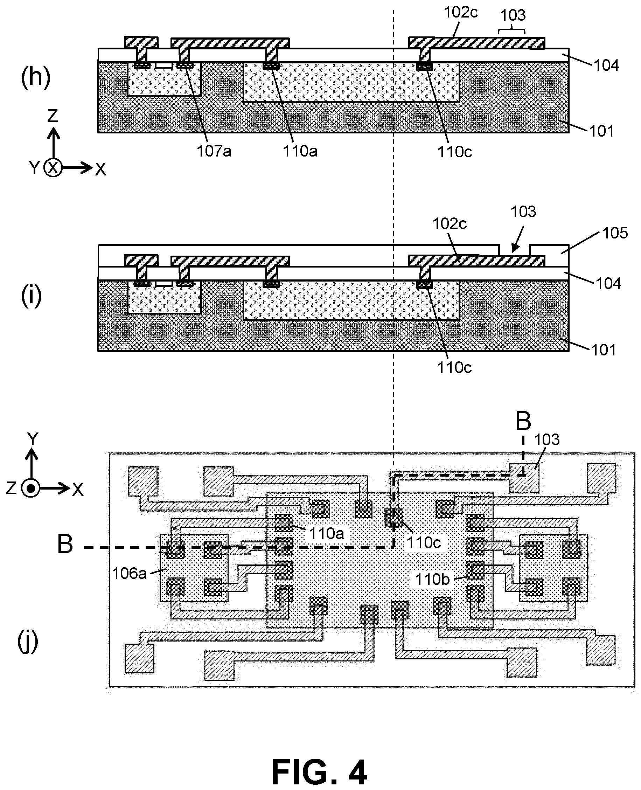

In the example of FIG. 1A, the main substrate 109 also has a plurality of contacts (e.g. bondpads) 110c leading to a plurality of contact zones 103 via interconnections 102c formed in the at least one RDL layer. The contact zones 103 can be used to form external terminals of the packaged device 100, as will be described further, e.g. in FIG. 4(h) and FIG. 4(j).

The principles used in the device 100 allow to make a different trade-off between the following conflicting requirements:
i) providing a (relatively) small CMOS chip (e.g. having a length "L1" smaller than the distance "dx" between the sensors);
ii) measuring a magnetic field difference or gradient having a relatively large magnitude (e.g. of at least 10 mT), by increasing the distance "dx" between the sensors;
iii) providing a single packaged device (thus avoiding external wires);
In fact, the proposed solution also offers the following (optional) advantages:
iv) it allows to "customize" the distance between the sensors at the packaging stage, without having to redesign any of the three substrates. This allows to optimize a solution for series of much smaller quantities.
v) it is even possible to use sensors having a sensitivity higher than that of CMOS sensors, by using different sensor substrates (e.g. Ga-As or In-As).

**FIG. 1B** shows that the three semiconductor substrates 109, 106a, 106b are arranged next to each other. In preferred embodiments, the substrates are arranged such that their "active surfaces" are coplanar, even if the first substrate 109 has a thickness (in the Z-direction) different from the sensor substrates. The layers 108a, 111, 108b are passivation layers on top of the first sensor substrate 106a, on top of the first substrate 109, and on top of the second sensor substrate 106b respectively. The layer 104 is a first passivation layer of the RDL-stack, and the layer 105 is a second passivation layer of the RDL-stack. The tracks 102 are preferably copper tracks or aluminum tracks. They provide a good electrical and thermal contact between contact areas (e.g. bondpads) 107a, 107b of the sensor substrates and contact areas (e.g. bondpads) 110a, 110b of the main substrate 109. The packaged device 100 may have a mainly rectangular shape (as seen from a direction perpendicular to the substrates).

In the example shown in FIG. 1A and FIG. 1B, the first substrate 109 is situated substantially in the middle between the two sensor substrates 106a, 106b, but that is not absolutely required for the invention to work.

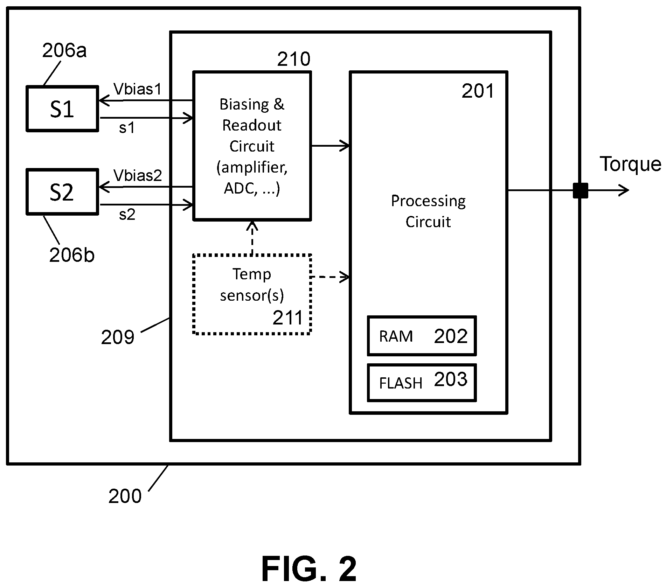

**FIG. 2** is an illustrative functional block-diagram of the magnetic sensor device of FIG. 1A and FIG. 1B. This is not the main aspect of the present invention, but is provided for completeness.

In the example shown, the packaged device 200 comprises three substrates: a first substrate 209 comprising at least a processing circuit 201; a second substrate 206a comprising a first magnetic sensor S1; and a third substrate 206b comprising a second magnetic sensor S2.

In the example shown in FIG. 2, the first substrate 209 furthermore contains a biasing and readout circuit 210, configured for providing a first biasing voltage Vbias1 or a first biasing current to the first sensor substrate 206a, and for providing a second biasing voltage Vbias2 or a second biasing current to the second sensor substrate 206b. In response, the first sensor substrate 206a provides a first sensor signal s1 to the first substrate 209, and the second sensor substrate 206b provides a second sensor signal s2 to the first substrate 209, for further processing.

The first substrate may further comprise one or more of the following: an analog multiplexer, an amplifier for amplifying the first and the second signal s1, s2, and an analog-to-digital convertor ADC, etc.

The first substrate may also comprise a temperature sensor 211 for measuring a temperature of the first substrate 209. This temperature may be used as an indication for the temperature of the first and second sensor S1, S2, and may be used for temperature compensation of the sensor signals. The temperature compensation may be implemented in the analog domain or in the digital domain.

In certain embodiments, when biasing the magnetic sensors with a known current, the temperature of the sensor substrates can also be estimated by measuring the resulting voltage difference over the supply nodes, and by estimating the resulting power dissipation.

In certain embodiments, the first sensor substrate may further comprise a first temperature sensor, and the second sensor substrate may further comprise a second temperature sensor, and the first sensor substrate would further provide a first temperature signal to the main substrate, and the second sensor substrate would further provide a second temperature signal to the main substrate.

The biasing source (e.g. voltage source or current source) may be an independent voltage or current source, or may be a dependent voltage or current source, e.g. as described in more detail in EP3885779(A1).

In order to understand the present invention, it suffices to say that the sensor signals are temperature corrected (in the analog or digital domain) before a difference between the sensor signals is calculated. As explained in EP3885779(A1), the difference may be calculated in the analog domain (i.e. before digitization) or in the digital domain (i.e. after digitization). Calculating the difference in the analog domain reduces the risk of saturating the ADC, especially in the presence of an external disturbance field.

The processing circuit 201 may comprise a programmable processor, e.g. a programmable DSP (digital signal processor).

The processing circuit 201 may also contain a non-volatile memory 203, e.g. flash memory, storing programmable instructions for the programmable processor, and optionally also storing at least one constant K. The processing circuit may be further configured for providing an output value derived from said difference signal, e.g. calculated in according with the following formula: output = K.(s1-s2), where s1 is the first sensor signal or a signal derived therefrom, (e.g. after amplification, temperature compensation, and digitization), and s2 is the second sensor signal or a signal derived therefrom, (e.g. after amplification, temperature compensation, and digitization), and K is a predefined constant stored in the non-volatile memory.

In another or further embodiment, the non-volatile memory may store a predefined function f(), e.g. in the form of coefficients of a polynomial, or in the form of a table, and the processing circuit may be further configured for providing an output value as a function of said difference signal, e.g. calculated in accordance with the formula: output = f(s1-s2).

This offers the advantage that the output may be a value of a torque to be measured (e.g. expressed in Nm).

In certain embodiments, the sensor substrates are configured to receive a biasing voltage and/or a biasing current from the first substrate, and to provide an output of the sensor circuit (e.g. an output of a Hall plate or an output of a Wheatstone bridge) to the first substrate for further processing.

In the example shown in FIG. 2, the biasing and readout circuit 210 and the optional temperature sensor 211 is implemented on the first substrate 209, but that is not absolutely required for the invention to work, and while generally not preferred, at least a portion of the biasing and readout circuit may be implemented on the sensor substrates 206a, 206b.

In the example shown in FIG. 2, the first substrate 209 has an optional temperature sensor 211, and the sensor substrates do not have temperature sensors, but as explained above, it is also possible to provide a temperature sensor on each of the sensor substrates.

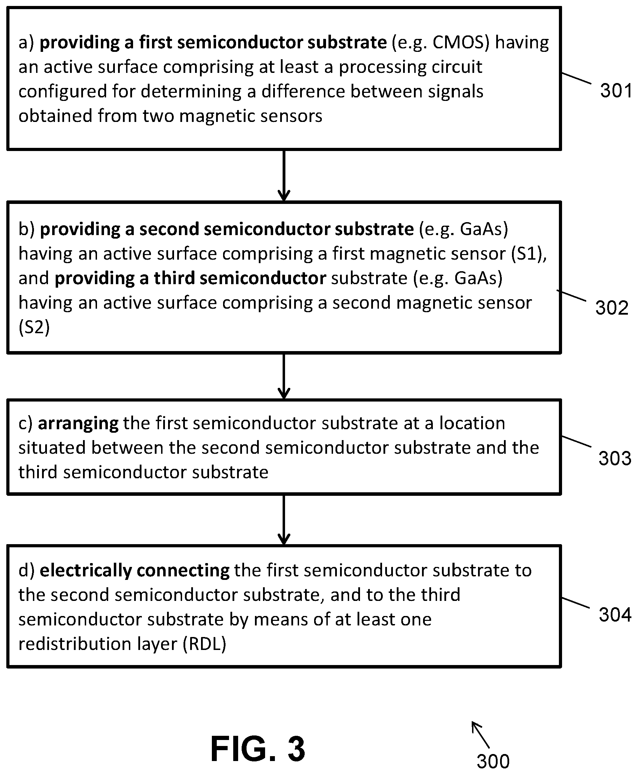

**FIG. 3** shows a flow-chart of a method 300 of producing a magnetic sensor device like the one shown in FIG. 1A and FIG. 1B. The method 300 comprises the steps of:
a) providing in step 301 a first semiconductor substrate 109 (e.g. a CMOS substrate) having an active surface comprising at least a processing circuit 201 configured for determining a difference between signals obtained from two magnetic sensors S1, S2;
b) providing in step 302 a second semiconductor substrate (e.g. GaAs) having an active surface comprising a first magnetic sensor S1, and providing a third semiconductor substrate (e.g. GaAs) having an active surface comprising a second magnetic sensor S2;
c) arranging in step 303 the first semiconductor substrate 109 at a location situated between the second semiconductor substrate 106a and the third semiconductor substrate 106b;
d) electrically connecting in step 304 the first semiconductor substrate 109 to the second semiconductor substrate 106a, and to the third semiconductor substrate 106b by means of at least one redistribution layer (RDL), or by means of an RDL-stack.

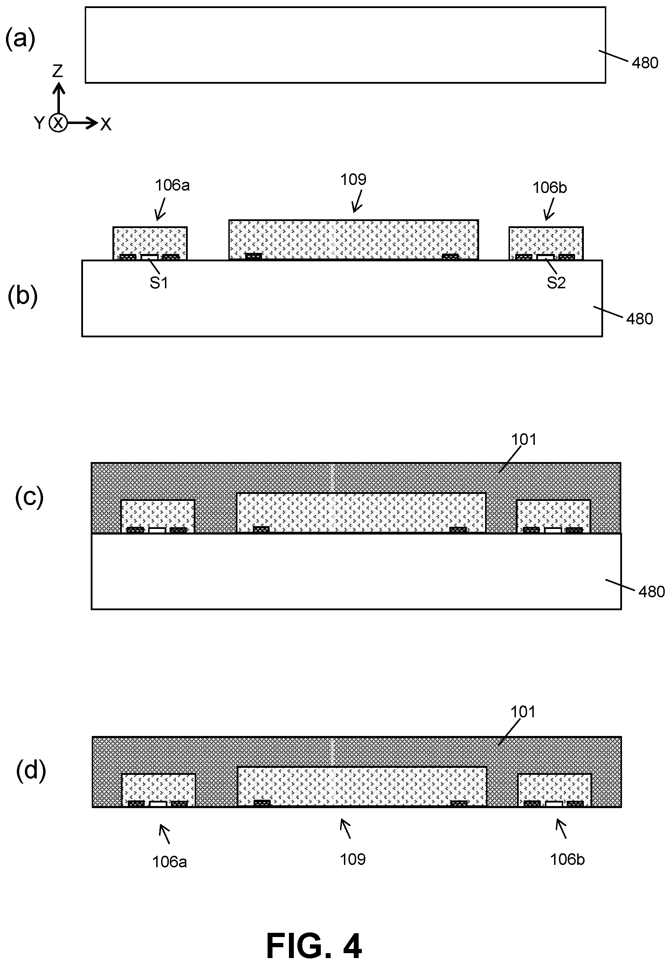

**FIG. 4(a) to FIG. 4(j)** illustrate in more detail various steps of a method of producing a magnetic sensor device like the one shown in FIG. 1A and FIG. 1B.

Before describing the various steps, it is noted that:

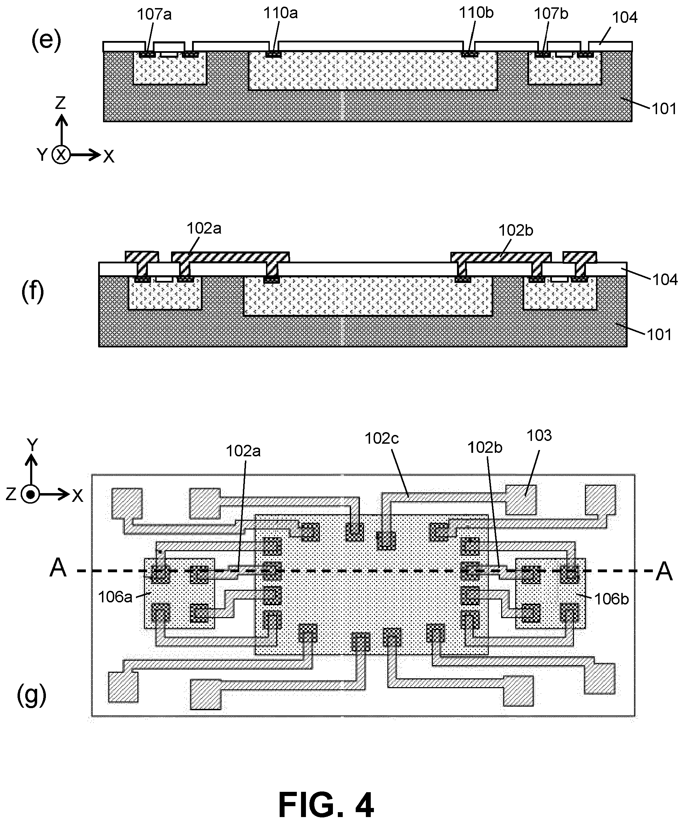

- **FIG. 4(g)** shows a planar view with a line A-A passing through both sensor substrates 106a, 106b. FIG. 4(a) to FIG. 4(f) show cross sectional views according to this line A-A, and that
- **FIG. 4(j)** shows a planar view with a line B-B passing through one sensor substrate 106a and through one terminal contact 103. FIG. 4(h) and FIG. 4(i) show cross sectional views according to this line B-B.

Now the various steps can be described:
In **FIG. 4(a)****,** a carrier substrate 480 is provided, e.g. a glass substrate or a metal substrate.

In **FIG. 4(b)****,** three semiconductor substrates are provided, including a first semiconductor substrate 109 comprising at least a processing circuit, a second semiconductor substrate 106a (also referred to as first sensor substrate) comprising at least a first sensor S1, and a third semiconductor substrate 106c (also referred to as second sensor substrate) comprising at least a second sensor S2. The first substrate 109 is preferably a Si substrate processed with a CMOS compatible process. The sensor substrates 106a, 106b may be Si substrates compatible with the CMOS process, or Si substrates incompatible with the CMOS process but providing magnetic sensor elements with a larger sensitivity than with the CMOS process, or may comprise a compound semiconductor material selected from the III-V-group, such as for example Ga-As or In-As. The substrates are placed (e.g. picked and placed) with their active surfaces facing towards the carrier substrate 480, and such that the first substrate 109 is positioned in an area between the sensor substrates 106a, 106b. A temporary bonding material may be used to temporary bond the substrates to the carrier substrate. There may be a passivation layer 108a, 108b over the active surfaces of the sensor substrates 106a, 106b (not shown here in order not to overload the drawings, but see e.g. FIG. 1B), and there may be a passivation layer 111 over the active surface of the first substrate 109 (e.g. shown in FIG. 1B).

**FIG. 4(c)** shows the structure of FIG. 4(b) after over-molding the substrates with an epoxy molding compound 101, and after curing.

**FIG. 4(d)** shows the structure of FIG. 4(c) after debonding the carrier substrate 480, and cleaning the bonding material. The result is referred to as a "reconstituted wafer". The mold compound provides structural strength.

It is an advantage that the active surfaces of the three substrates are located in a same (virtual) plane, even if the substrates have different thicknesses. This allows that many or all of the vias of the redistribution RDL layer have substantially the same length (in a direction perpendicular to the substrates), which is beneficial for the production thereof. Another advantage is that this makes it possible to mount the three substrates at a same distance from an external object in some applications.

**FIG. 4(e)** shows the structure of FIG. 4(d) rotated upside-down, and after providing an electrical isolation layer 104, e.g. a polyimide layer, and after patterning the isolation layer 104 to create openings for providing access to contact zones (e.g. bondpads) 107a on the first sensor substrate 106a, and openings to contact zones (e.g. bondpads) 110a, 110c, 110b on the first substrate 109, and openings to contact zones (e.g. bondpads) 107b on the second sensor substrate 106b.

**FIG. 4(f)** shows the structure of FIG. 4(e) after providing a patterned conductive layer (e.g. by patterning a resist and electroplating with copper) in order to provide electrical connections 102a between said contact zones 107a and 110a, and to provide electrical connections 102b between said contact zones 107b and 110b, and to create electrical connections 102c, as will be explained further.

**FIG. 4(h)** shows a cross-section of the same structure, but according to the line B-B of FIG. 4(j). The left side of FIG. 4(h) is identical to that of FIG. 4(f), but the right side is different.

**FIG. 4(i)** shows the structure of FIG. 4(h) after applying and patterning a top passivation layer 105, e.g. a second polyimide layer, forming openings to provide access to contact zones 103 formed by the electrical interconnections 102c. A noble metal (e.g. silver or gold) may be provided on top of these contact zones 103, thereby forming external terminals of the packaged device.

It is noted that FIG. 4(a) to FIG. 4(j) show only one sensor device, but in fact, this process is performed at wafer level, meaning that a relatively large number of sensor devices is formed simultaneously when performing the steps shown in FIG. 4(a) to FIG. 4(j). The method typically also comprises a step of singulation, e.g. by sawing or by laser cutting the wafer into individual sensor devices.

**FIG. 5** shows an example of another magnetic sensor device 500, which can be seen as a variant of the magnetic sensor device 100 shown in FIG. 1A and FIG. 1B. The main difference between the sensor device 500 of FIG. 5 and the sensor device 100 of FIG. 1A and FIG. 1B is that the sensor device 500 has only four terminals 503. These terminals may be used for example to provide a supply voltage (e.g. VDD), and a reference voltage (e.g. GND), and an output port, or a communication interface (e.g. a serial communication interface).

In certain embodiments of the sensor device 500 of FIG. 5, the main substrate 509 may further comprise a temperature sensor configured for measuring a temperature of the main substrate, and the processing circuit may be configured to use this temperature as an estimate of the temperature of the sensor substrates, and to perform a temperature correction of the signals obtained from the sensors based on this single temperature.

In certain embodiments of the sensor device 500 of FIG. 5, the main substrate 509 may further comprise two temperature sensors, one temperature sensor T1 arranged near contact zones (e.g. bondpads) connected to the first sensor substrate 506a, and one temperature sensor T2 arranged near contact zones (e.g. bondpads) connected to the second sensor substrate 506b. By arranging the temperature sensors near contact zones which are connected to the respective sensor substrates, the measured temperatures can be used to estimate the temperatures of the sensor substrates, and the signals can be corrected accordingly. This technique allows to correct for temperature differences between the two sensor substrates. It is an advantage that the temperature sensors are implemented on the main substrate, inter alia because by doing so, (i) the area of the (typically more expensive) sensor substrates can be kept small, and (ii) the number of interconnections between the main substrate and the sensor substrates can be kept small.

In certain embodiments of the sensor device 500 of FIG. 5, each sensor substrate further comprises a temperature sensor (not shown), and the sensor substrates are further configured for providing a temperature signal to the first substrate, and the processing circuit is further configured to correct the signals obtained from the magnetic sensors using the measured temperature signals.

In certain embodiments, when biasing the magnetic sensors with a known current, the temperature of the sensor substrates can also be estimated by measuring the resulting voltage difference over the supply nodes, and by estimating the resulting power dissipation.

The two sensor substrates 506a, 506b may each contain a magnetic sensor (not explicitly shown) capable of measuring a magnetic field component in the Z-direction, and the processing circuit may be configured to further process the two sensor signals Bz1, Bz2. Such a sensor device may for example be used in a torque sensor system as illustrated in FIG. 9, FIG. 11, FIG. 15, FIG. 18.

The two sensor substrates 506a, 506b may each contain a magnetic sensor (not explicitly shown) capable of measuring a magnetic field component in the X-direction, and the processing circuit may be configured to further process the two sensor signals Bx1, Bx2. Such a sensor device may for example be used in a torque sensor system as illustrated in FIG. 10, FIG. 12, FIG. 14, FIG. 17.

The two sensor substrates 506a, 506b may each contain a magnetic sensor (not explicitly shown) capable of measuring a magnetic field component in the Y-direction, and the processing circuit may be configured to further process the two sensor signals By1, By2. Such a sensor device may for example be used in a torque sensor system as illustrated in FIG. 13, FIG. 16, FIG. 19.

**In** **FIG. 5****,** the sensor substrates are shown, but not the magnetic sensor itself (e.g. horizontal Hall plate, vertical Hall plate, Wheatstone bridge with MR sensor elements), because relevant for FIG. 5 is not the magnetic sensor elements or structure, but rather to show how the sensor substrates 506a, 506b are interconnected to the main substrate 509. Indeed, any suitable magnetic sensor can be used, e.g. comprising only horizontal Hall elements, or comprising only vertical Hall elements, or comprising only MR elements (e.g. AMR or XMR elements), or comprising a GMI sensor. However, because the magnetic field generated by the shaft is typically very weak, the sensor substrates 506a, 506b are preferably made in a semiconductor technology (not CMOS compliant) that offers a higher sensitivity than CMOS sensors.

It is also worth mentioning, that the sensor substrates 506a, 506b are larger than the magnetic sensor itself, inter alia because a number of contact zones (e.g. bondpads) need to be provided, for allowing connection of the sensor substrate with the main substrate 509.

**FIG. 6A to FIG. 6C** show examples of other magnetic sensor devices 600, 600', 600" that may be used in embodiments of torque sensor systems proposed by the present invention. These sensor devices comprise: a lead frame, a first semiconductor substrate 609, 609', 609" mounted on the lead frame, and two sensor substrates 606a, 606b; 606a', 606b'; 606a", 606b" mounted on top of, or underneath the first semiconductor substrate 609, 609', 609", and connected thereto by means of bond wires. The arrangement is then preferably overmolded with a mould compound 601, 601', 601" to form a single packaged device, e.g. using an epoxy.

The sensor substrates illustrated in FIG. 6A to FIG. 6C may comprise various types of magnetic sensors, e.g. comprising only horizontal Hall elements, or only vertical Hall elements, or only MR elements, e.g. similar as described above (in relation to FIG. 5).

In another or a further embodiment, the main substrate illustrated in FIG. 6A to FIG. 6C may comprise a non-volatile memory, and may comprise at least one constant value, or a look-up table with values which can be used (e.g. interpolated) to convert a magnetic difference signal into a torque value.

In another or a further embodiment, the first substrate 609, 609', 609" illustrated in FIG. 6A to FIG. 6C may comprise one temperature sensor for measuring the temperature of the main substrate, and using this as an estimate of the temperature of the sensor substrates, to correct the signals obtained from the sensor substrates for temperature variations, optionally by further taking into account an estimate of the power dissipated by the sensor substrates. The latter can be determined by providing a known biasing voltage Vbias and measuring the biasing current Ibias, or vice versa.

In another or a further embodiment, the main substrate 609, 609', 609" illustrated in FIG. 6A to FIG. 6C may comprise two temperature sensors (schematically indicated by T1, T2), respectively arranged near contact zones (e.g. bondpads) connected to the respective sensor substrates, for measuring a temperature indicative of the temperature of each sensor substrate, and the processing circuit may be configured to use these two temperature signals to correct the signals obtained from the sensor substrates.

In another or further embodiment, each sensor substrate may comprise a temperature sensor, and the sensor substrates may be further configured for providing a temperature signal to the first substrate, and the processing circuit of the first substrate may be further configured for temperature compensating the signals obtained from the magnetic sensors taking into account these temperature signals.

**FIG. 7** shows an example of another magnetic sensor device 700 that can be used in embodiments of the present invention. The sensor device 700 comprises: a lead frame 720, a first semiconductor substrate 709 (also referred to as "main substrate") mounted on the lead frame 720, and two sensor substrates 706a, 706b also mounted on top of the lead frame, such that the first semiconductor substrate 709 is situated between the two sensor substrates 706a, 706b, on the same side of the lead frame. Preferably, the substrates and the bond wires and a portion of the leadframe is then overmoulded (not shown for illustrative purposes).

The first substrate 709 may be electrically connected to the first and to the second sensor substrate 706a, 706b by means of bondwires, either directly (as shown), or indirectly via certain leads of the lead frame (not shown) connected at one location to the sensor substrate and at another location to the first substrate. This is especially useful for relatively large values of the distance dx between the sensors S1, S2.

The leadframe shown in FIG. 7 only has a very simple layout, but of course, the present invention is not limited hereto, and other lead frames can also be used.

In the example shown in FIG. 7, the two sensor substrates 706a, 706b are arranged (in the Y-direction) approximately halfway of the main substrate 709, but that is not required for the present invention to work. In fact, in some embodiments, it may be better to move the sensor substrates such that they align with an edge of the main substrate 709. By doing so, the sensors will be situated closer to the shaft, e.g. in FIG. 16 and FIG. 17.

The sensor substrates illustrated in FIG. 7 may comprise various types of magnetic sensors, e.g. comprising only horizontal Hall elements, or only vertical Hall elements, or only MR elements, e.g. similar as described above (in relation to FIG. 5).

In another or a further embodiment, the main substrate illustrated in FIG. 6A to FIG. 6C may comprise a non-volatile memory, and may comprise at least one constant value, or a look-up table with values which can be used (e.g. interpolated) to convert a magnetic difference signal into a torque value.

In another or a further embodiment, the main substrate illustrated in FIG. 6A to FIG. 6C may comprise one temperature sensor for measuring the temperature of the main substrate, and using this as an estimate of the temperature of the sensor substrates, to correct the signals obtained from the sensor substrates, optionally by further taking into account an estimate of the power dissipated by the sensor substrates. The latter can be determined by providing a known biasing voltage Vbias and measuring the biasing current Ibias, or vice versa.

In another or a further embodiment, the main substrate illustrated in FIG. 6A to FIG. 6C may comprise two temperature sensors, respectively arranged near contact zones (e.g. bondpads) connected to the respective sensor substrates, for measuring a temperature indicative of the temperature of each sensor substrate, and may be configured to use these two temperature signals to correct the signals obtained from the sensor substrates not only for temperature variations, but also for a temperature difference between the two sensor substrates.

In another or further embodiment, each sensor substrate may comprise a temperature sensor, and the sensor substrates may be further configured for providing a temperature signal to the first substrate, and the processing circuit of the first substrate may be further configured for temperature compensating the signals obtained from the magnetic sensors taking into account these temperature signals.

Of course, the embodiments shown in FIG. 5 to FIG. 7 are only examples, and variants of these examples may have other characteristics than those shown in FIG. 5 to FIG. 7, for example a different number of external terminals, or package pins, or dimensions.

**FIG. 8A and FIG. 8B** are abstract representations of magnetic sensor devices as can be used in torque sensor systems proposed by the present invention, and described further in FIG. 9 to FIG. 19. As mentioned above, this abstract representation can cover various types of magnetic sensor devices comprising three individual semiconductor substrates in a single package, which substrates may be positioned next to each other, or on top of each other. At least the following embodiments are envisioned: (a) a wafer-level package device, e.g. as described in FIG. 1A to FIG. 5; (b) magnetic sensor devices where the sensor substrates are stacked on top of, or below the first substrate, the latter being mounted on a lead frame, e.g. as illustrated in FIG. 6A to FIG. 6C; (c) magnetic sensor devices comprising a lead frame, wherein each of the first, second and third substrate are mounted directly on the lead frame, e.g. as illustrated in FIG. 7.

The main purpose of this abstract representation is to show that the device has a first magnetic sensor S1 and a second magnetic sensor S2, spaced apart along an X-direction by a predefined distance dx. The abstract representation in side view or top view allow to unambiguously specify the position and orientation of the magnetic sensor device relative to the shaft in the torque sensor systems described next, in FIG. 9 to FIG. 19, and variants thereof.

**FIG. 9 to FIG. 19** show illustrative examples of magnetoelastic torque sensor systems proposed by the present invention, using a single packaged sensor device comprising three semiconductor substrates, e.g. as described in FIG. 1 to FIG. 7. As mentioned above, in these drawings the magnetic sensor device will be represented by the abstract representation of FIG. 8A and FIG. 8B, which may be any of the sensor devices described in FIG. 1 to FIG. 7, or variants thereof, for illustrative purposes. Thus, even though the two magnetic sensors S1, S2 of the magnetic sensor devices shown in FIG. 9 to FIG. 19 are shown next to the first substrate labelled "main", the present invention is not limited thereto, and also covers embodiments where the two sensor substrates are mounted on top of, or below the main substrate (e.g. as illustrated in FIG. 6A to FIG. 6C). Important for the present invention is that the magnetic sensor device is a single packaged device that comprises three semiconductor substrates, (i.e. not a single, monolithic semiconductor substrate comprising the processing circuit and the magnetic sensors), irrespective of whether the first semiconductor substrate is mounted between the second and the third semiconductor substrate (e.g. as illustrated in FIG. 1 to FIG. 5 or FIG. 7), or whether the sensor substrates are mounted on top of, or below the first substrate (e.g. as illustrated in FIG. 6A to FIG. 6C). In all of these embodiments, the active surfaces of the three substrates are oriented in parallel.

**FIG. 9** shows an illustrative embodiment of a magnetoelastic torque sensor system 970 comprising: a shaft 973 having two axial zones 971, 972 that are magnetized in opposite circumferential directions, and a magnetic sensor device 900 having two magnetic sensors S1, S2 which are spaced apart by a predefined distance dx along an X-axis which is parallel to the shaft 973. As mentioned above, such shafts are known in the art, and hence need not be described in more detail here. Suffice it to say that the shaft may comprise a material that is magnetized itself, e.g. a steel alloy, or that the shaft may comprise one or more magnetic rings, fixedly mounted to the shaft, such that a torque is transferred from the shaft to the ring.

The sensor device 900 is oriented such that a normal (Z) to the substrates is radially oriented with respect to the shaft 973. The two sensors S1, S2 are situated at axial positions in the vicinity of edges (or ends) 975, 977 of the magnetized zones 971, 972, and the two sensors S1, S2 measure magnetic field components Br1, Br2 oriented in a radial direction of the shaft. These magnetic field components can also be referred to as Bz1, Bz2 in the Cartesian coordinate system connected to the sensor device 900, where the X-axis is defined by a virtual line passing through the two sensors S1, S2, the Z-axis is perpendicular to the three substrates, and the Y-axis is perpendicular to the X and Z-axis.

Each of the sensors S1 and S2 may comprise one or more horizontal Hall elements (preferably without integrated magnetic concentrator), e.g. only one horizontal Hall element, or two horizontal Hall elements connected in series or connected in parallel, or four horizontal Hall elements, e.g. two horizontal Hall elements orthogonally biased with respect to one another.

Assuming the first axial zone 971 has an axial length L1, and the second axial zone 972 has a second axial length L2, and the two axial zones are spaced apart by a distance L3, preferably the distance dx between centres of the two sensors S1, S2 is equal to (L1+L3) with a tolerance margin of ±10% or ±5% or ±2%. Preferably the first sensor S1 and the second sensor S2 are slightly offset from the respective edges (or ends) 975, 977 of the magnetised zones 971, 972 by a distance ε having a value in the range from 0 to 20% of L1, or having a value in the range from 3% to 15% of L1, e.g. equal to about 10% of L1, in order to reduce the effect of a mounting position offset (e.g. an axial mounting offset), and/or for allowing easier mechanical assembly. In FIG. 9 the offset is inwards (i.e. towards the middle of the magnetized zone), but the present invention is not limited hereto, and an outward offset is also possible.

The processing circuit of the magnetic sensor device 900 is configured to determine a difference signal ΔBz between the magnetic field components Bz1, Bz2 in accordance with the formula: ΔBz=(Bz1-Bz2), and for outputting a signal or value indicative of the torque exerted upon the shaft. The processing circuit may e.g. be configured for determining a value T of the torque exerted upon the shaft as a predefined function of this difference signal, e.g. in accordance with the formula: T=f9(ΔBz), where f9 is a predefined function, e.g. a third, second or first order polynomial function of (ΔBz). The function may be stored in a suitable manner in a non-volatile memory of the processing device, e.g. by means of coefficients of the polynomial function, or in the form of a lookup table. By determining the signal indicative of the torque as a function of the magnetic field difference, an influence of an external disturbance field is highly reduced or even eliminated.

In a preferred embodiment, the torque T is calculated as a value proportional to the magnetic field difference ΔBz, e.g. in accordance with the formula: T=K9*(ΔBz), where K9 is a predefined constant, which can e.g. be determined by a calibration test performed during production, and which may be written in said non-volatile memory inside the sensor device 900. For example, in case of a sensor device produced in the way described in FIG. 1A to FIG. 4, the value of K9 may be written in the non-volatile memory at wafer-level, before cutting or sawing the wafer.

The sensor device 900 is preferably mounted relative to the shaft 973 such that a distance d1 between an outer surface of the shaft and the sensor elements S1, S2 is smaller than 10.0 mm, or smaller than 8 mm, or smaller than 5.0 mm. In preferred embodiments, the radial distance "g" between the shaft and the packaged device 900 is at least 0.1 mm, or at least 0.3 mm, or at least 0.5 mm. The radial distance d1 between the shaft and the active surfaces of the sensors may be at least 0.2 mm, or at least 0.4 mm, or at least 0.5 mm, or at least 0.8 mm, e.g. equal to about 1.0 mm, or equal to about 2.0 mm, or equal to about 3.0 mm.

In a variant of FIG. 9 (not shown), the device is mounted "upside-down", i.e. the device 900 is oriented such that the active surfaces of the sensor substrates are oriented towards the shaft. This may allow to decrease the distance "d1".

In a variant of FIG. 9 (not shown), the shaft has only one axial zone that is magnetized in a circumferential direction, e.g. zone 971 is present and zone 972 is absent. In this case, the first sensor S1 would still be positioned relative to the axial zone 971 as illustrated in FIG. 9 and would still measure a signal Bz1 indicative of the magnetic field induced by the torque plus an external disturbance field (if present), whereas the second sensor S2 would only measure the external disturbance field (if present). This embodiment offers the advantage that the shaft is easier to produce, but the amplitude of the difference signal ΔBz will typically be only half of that of FIG. 9, thus the signal-to-noise ratio (SNR) of this signal would be slightly worse than that of FIG. 9. The formula T=K*(ΔBz) can also be used in this case, but the value of K would typically be twice the value of K9 of FIG. 9.

**FIG. 10** shows an illustrative embodiment of a magnetoelastic torque sensor system 1070, which can be seen as a variant of the system 900 shown in FIG. 9. The system 1000 comprises a shaft 1073 identical to the shaft 973 of FIG. 9, and a magnetic sensor device 1000 having two magnetic sensors S1, S2 which are spaced apart by a predefined distance dx along an X-axis which is parallel to the shaft 1073.

The sensor device 1000 is oriented such that a normal (Z) to the substrates is radially oriented with respect to the shaft 1073. The two sensors S1, S2 are situated at axial positions in the vicinity of the middles of the magnetized zones 1071, 1072. The two sensors S1, S2 measure magnetic field components Ba1, Ba2 oriented in the axial direction of the shaft 1073. These magnetic field components can also be referred to as Bx1, Bx2 in the Cartesian coordinate system connected to the sensor device 1000.

Each of the sensors S1 and S2 may comprise an integrated magnetic concentrator and two horizontal Hall elements arranged near the periphery of that IMC and located on the X-axis, or may comprise one or more vertical Hall elements oriented with their axis of maximum sensitivity oriented in the X-direction, or may comprise one or more magneto-resistive (MR) elements arranged for measuring a magnetic field component oriented in the X-direction.

Assuming the first axial zone 1071 has an axial length L1, and the second axial zone 1072 has a second axial length L2, and the two axial zones are spaced apart by a distance L3, preferably the distance dx between centres of the two sensors S1, S2 is equal to [L3+(L1+L2)/2] with a tolerance margin of ±10% or ±5% or ±2%. Preferably the first sensor S1 and the second sensor S2 are offset from the respective edges (or ends) of the magnetised zones 1071, 1072 by a distance µ having a value in the range from 40% to 60% of L1, or in the range from 45% to 55% of L1, e.g. equal to about 50% of L1.

The processing circuit of the magnetic sensor device 1000 is configured to determine a difference signal ΔBx between the magnetic field components Bx1, Bx2 in accordance with the formula: ΔBx=(Bx1-Bx2), and for outputting a signal or value indicative of the torque exerted upon the shaft. The processing circuit may e.g. be configured for determining a value T of the torque exerted upon the shaft as a predefined function of this difference signal, e.g. in accordance with the formula: T=f10(ΔBx), where f10 is a predefined function, e.g. a third, second or first order polynomial function of (ΔBx). The function may be stored in a suitable manner in a non-volatile memory of the sensor device 1000, e.g. by means of coefficients of the polynomial function, or in the form of a lookup table. By determining the signal indicative of the torque as a function of the magnetic field difference, an influence of an external disturbance field is highly reduced or even eliminated.

In a preferred embodiment, the torque T is calculated as a value proportional to the magnetic field difference ΔBx, e.g. in accordance with the formula: T=K10*(ΔBx), where K10 is a predefined constant, which may be written in said non-volatile memory inside the sensor device 1000, e.g. during production or during a calibration procedure.

Similar distances d1 and g may be used as mentioned for FIG. 9.

In a variant of FIG. 10 (not shown), the device is mounted "upside-down", i.e. the device 1000 is oriented such that the active surfaces of the sensor substrates are oriented towards the shaft. This may allow to decrease the distance "d1".

In a variant of FIG. 10 (not shown), the shaft has only one axial zone that is magnetized in a circumferential direction, e.g. zone 1071 is present and zone 1072 is absent. In this case, the first sensor S1 would still be positioned relative to the axial zone 1071 as illustrated in FIG. 10 and would still measure a signal Bx1 indicative of the magnetic field induced by the torque plus an external disturbance field (if present), whereas the second sensor S2 would only measure the external disturbance field (if present). This embodiment offers the advantage that the shaft is easier to produce, but the amplitude of the difference signal ΔBx will typically be only half of that of FIG. 10, thus the signal-to-noise ratio (SNR) of this signal would be slightly worse than that of FIG. 10. The formula T=K*(ΔBx) can also be used in this case, but the value of K would typically be twice the value of K10 of FIG. 10.

**FIG. 11** shows an illustrative embodiment of a magnetoelastic torque sensor system 1170 comprising: a shaft 1173 having only one axial zone 1171 that is magnetized in a circumferential direction, (or has two magnetized zones but only one is used), and a magnetic sensor device 1100 having two magnetic sensors S1, S2 which are spaced apart by a predefined distance dx along an X-axis which is parallel to the shaft 1173.

The torque sensor system 1100 of FIG. 11 can be considered as another variant of the torque sensor system of FIG. 9, and most of what has been explained above is also applicable here.

The sensor device 900 is oriented such that a normal (Z) to the substrates is radially oriented with respect to the shaft 1173. The two sensors S1, S2 are situated at axial positions near the edges (or ends) 1175, 1176 of the magnetized zone 1171, and are preferably situated at an axial position between those edges.

The magnetic field components measured by the sensors S1, S2 can be referred to as Br1, Br2 with respect to the shaft 1173, or as Bz1, Bz2 with respect to the sensor device 1100.

The magnetized zone 1171 has an axial length L1. Preferably the first sensor S1 and the second sensor S2 are slightly offset from the edges of the magnetised zone 1171 by a distance ε having a value in the range from 0 to 20% of L1, or having a value in the range from 3% to 15% of L1, e.g. equal to about 10% of L1, in order to reduce the effect of a mounting position offset. Preferably the distance dx between centres of the two sensors S1, S2 is equal to (L1-2*ε ) with a tolerance margin of ±10% or ±5% or ±2%. Alternatively, the sensors are shifted outwards over said offset ε, in which case the distance dx between centres of the two sensors S1, S2 is equal to about (L1+2*ε ) with a tolerance margin of ±10% or ±5% or ±2%.

The processing circuit of the magnetic sensor device 1100 is configured to determine a difference signal ΔBz between the magnetic field components Bz1, Bz2 in accordance with the formula: ΔBz=(Bz1-Bz2), and for outputting a signal or value indicative of the torque exerted upon the shaft. The processing circuit may e.g. be configured for determining a value T of the torque exerted upon the shaft as a predefined function of this difference signal, e.g. in accordance with the formula: T=f11(ΔBz), where f11 is a predefined function of the magnetic field difference. In a preferred embodiment, the torque T is calculated as a value proportional to the magnetic field difference ΔBz, e.g. in accordance with the formula: T=K11*(ΔBz), where K11 is a predefined constant. The value of K11 may be hardcoded, or may be stored in a non-volatile memory inside the sensor device 1100, e.g. during production or during a calibration procedure.

Similar distances between the shaft and the sensor device as mentioned above, are also applicable here. In a variant of FIG. 11 (not shown), the device is mounted "upside-down".

**FIG. 12** shows an illustrative embodiment of a magnetoelastic torque sensor system 1270 comprising: a shaft 1273 having only one axial zone 1271 that is magnetized in a circumferential direction, (or has two magnetized zones but only one is used), and a magnetic sensor device 1200 having two magnetic sensors S1, S2 which are spaced apart by a predefined distance dx along an X-axis which is radially oriented with respect to the shaft 1273.

The torque sensor system 1200 of FIG. 12 can be considered as a variant of the torque sensor system 1000 of FIG. 10, where the sensor device is 90° rotated about its Y-axis, and then 90° about its X-axis, and wherein the shaft has only one magnetized zone, and where the sensor device is shifted to an axial position near an edge 1275 of the magnetized zone 1273.

The sensor device 1200 is preferably oriented such that a normal (Z) to the substrates is oriented in a circumferential direction with respect to the shaft 1273. The two sensors S1, S2 are situated at an axial position between the two edges of the magnetized zone 1271, relatively close to one of the edges 1275. In a variant (not shown), the axial position of the sensors is situated slightly outside of the magnetized zone 1271.

The magnetic field components measured by the sensors S1, S2 can be referred to as Br1, Br2 with respect to the shaft 1273, or as Bx1, Bx2 with respect to the sensor device 1200.

The magnetized zone 1271 has an axial length L1. Preferably the axial position of the first and second sensor S1, S2 is slightly offset from one of the edges 1275 of the magnetised zone 1271 by a distance ε having a value in the range from 0 to 20% of L1, or having a value in the range from 3% to 15% of L1, e.g. equal to about 10% of L1, in order to reduce the effect of a mounting position offset and/or for allowing easier mechanical assembly. In FIG. 11 the offset is inwards (i.e. towards the middle of the magnetized zone), but the present invention is not limited hereto, and an outward offset is also possible.

The distance dx between centres of the two sensors S1, S2 can be chosen substantially independent of the length L1, but may be chosen depending on a distance "g" between the shaft 1273 and the package of the sensor device 1200, and thus on the distances d1, d2 between the shaft and the first and second sensor S1, S2. The smaller the value of d1 and the larger the value of d2, the larger the value of ΔBx will be for a given torque exerted upon the shaft.

In preferred embodiments, the radial distance "g" between the shaft and the packaged device 900 is at least 0.1 mm, or at least 0.3 mm, or at least 0.5 mm, and at most 5.0 mm. The radial distance d1 between the shaft and the sensor device 1200 is preferably at most 5.0 mm, or at most 4.0 mm, or at most 3.0 mm, or at most 2.0 mm, or at most 1.0 mm. Preferably the distance dx between the sensors S1 and S2 is at least 2 times d1 (dx≥2*d1), or at least 3 times d1 (dx≥3*d1), or at least four times d1 (dx≥4*d1) or at least 5 times d1 (dx≥5*d1).

The processing circuit of the magnetic sensor device 1200 is configured to determine a difference signal ΔBx between the magnetic field components Bx1, Bx2 in accordance with the formula: ΔBx=(Bx1-Bx2), and for outputting a signal or value indicative of the torque exerted upon the shaft. The processing circuit may e.g. be configured for determining a value T of the torque exerted upon the shaft as a predefined function of this difference signal, e.g. in accordance with the formula: T=f12(ΔBx), where f12 is a predefined function of the magnetic field difference ΔBx. In a preferred embodiment, the torque T is calculated as a value proportional to the magnetic field difference ΔBx, e.g. in accordance with the formula: T=K12*(ΔBx), where K12 is a predefined constant. The value of K12 may be stored in a non-volatile memory inside the sensor device 1200, e.g. during production or during a calibration procedure.

**FIG. 13** shows an illustrative embodiment of a magnetoelastic torque sensor system 1370 comprising: a shaft 1373 having only one axial zone 1371 that is magnetized in a circumferential direction, (or has two magnetized zones but only one is used), and a magnetic sensor device 1300 having two magnetic sensors S1, S2 which are spaced apart by a predefined distance dx along an X-axis which is radially oriented with respect to the shaft 1373.

The torque sensor system 1300 of FIG. 13 may at first sight seem a variant of the torque sensor system 1200 of FIG. 12, where the sensor device is shifted to an axial position towards the middle of the magnetized zone 1371, but in reality it is a different sensor device, because the sensors S1, S2 of this sensor device 1300 are configured for measuring a magnetic field component Ba1, Ba2 parallel to the shaft, or By1, By2 relative to the sensor device.

Each of the sensors S1 and S2 may comprise an integrated magnetic concentrator and two horizontal Hall elements arranged near the periphery of that IMC and situated on an imaginary line parallel to the Y-axis, or may comprise one or more vertical Hall elements oriented with their axis of maximum sensitivity oriented in the Y-direction, or may comprise one or more magneto-resistive (MR) elements arranged for measuring a magnetic field component oriented in the Y-direction.

The sensor device 1300 is preferably oriented such that a normal (Z) to the substrates is oriented in a circumferential direction with respect to the shaft 1373. The two sensors S1, S2 are situated at an axial position between the two edges 1375, 1376 of the magnetized zone 1371, near the middle of the magnetized zone 1371. More specifically, if the magnetized zone 1371 has an axial length L1, the axial position of the first and second sensor S1, S2 is preferably offset from one of the edges 1375 of the magnetised zone 1371 by a distance µ having a value in the range from 40% to 60% of L1, or having a value in the range from 45% to 55% of L1, e.g. equal to about 50% of L1.

The distance dx between centres of the two sensors S1, S2 can be chosen substantially independent of the length L1, but may be chosen depending on a distance between the shaft and the package of the sensor device 1300, and thus on the distances d1, d2 between the shaft and the first and second sensor S1, S2. The smaller the value of d1 and the larger the value of d2, the larger the value of ΔBy will be for a given torque exerted upon the shaft. Similar distances "d1" and "g" and "dx" may be used as mentioned for FIG. 12.

The processing circuit of the magnetic sensor device 1300 is configured to determine a difference signal ΔBy between the magnetic field components By1, By2 in accordance with the formula: ΔBy=(By1-By2), and for outputting a signal or value indicative of the torque exerted upon the shaft. The processing circuit may e.g. be configured for determining a value T of the torque exerted upon the shaft as a predefined function of this difference signal, e.g. in accordance with the formula: T=f13(ΔBy), where f13 is a predefined function of the magnetic field difference. In a preferred embodiment, the torque T is calculated as a value proportional to the magnetic field difference ΔBy, e.g. in accordance with the formula: T=K13*(ΔBy), where K13 is a predefined constant. The value of K13 may be stored in a non-volatile memory inside the sensor device 1300, e.g. during production or during a calibration procedure.

**FIG. 14** shows an illustrative embodiment of a magnetoelastic torque sensor system 1470 comprising: a shaft 1473 having only one axial zone 1471 that is magnetized in a circumferential direction, (or has two magnetized zones but only one is used), and a magnetic sensor device 1400 having two magnetic sensors S1, S2 which are spaced apart by a predefined distance dx along an X-axis which is radially oriented with respect to the shaft 1473.

The torque sensor system 1400 of FIG. 14 can be considered as a variant of the torque sensor system 1200 of FIG. 12, where the sensor device is 90° rotated about its X-axis.

In FIG. 14, the sensor device 1400 is oriented such that a normal (Z) to the substrates is oriented in an axial direction of the shaft 1473. Everything else described for the torque sensor system of FIG. 12 and the variants thereof, is also applicable here.

In a further variant of FIG. 12 and FIG. 14, the sensor device 1400 is rotated over any arbitrary angle about the X-axis. In all of these embodiments, the same magnetic field components Br1, Br2 with respect to the shaft, or Bx1, Bx2 with respect to the sensor device 1400 will be measured. In all of these embodiments, the torque can be calculated in accordance with the formula: T=f14(ΔBx), for example as T=K14*(ΔBx), where K14 is a predefined constant, which may be stored in a non-volatile memory.

**FIG. 15** shows an illustrative embodiment of a magnetoelastic torque sensor system 1570 comprising: a shaft 1573 having only one axial zone 1571 that is magnetized in a circumferential direction, (or has two magnetized zones but only one is used), and a magnetic sensor device 1500 having two magnetic sensors S1, S2 which are spaced apart by a predefined distance dx along an X-axis which is radially oriented with respect to the shaft 1573.

The torque sensor system 1570 of FIG. 15 may at first sight seem a variant of the torque sensor system 1370 of FIG. 13, where the sensor device is rotated by 90° with respect to the X-axis, but in reality it is a different sensor device, because the sensors S1, S2 of this sensor device 1500 are configured for measuring a magnetic field component Ba1, Ba2 parallel to the shaft, or Bz1, Bz2 relative to the sensor device, i.e. in a direction perpendicular to the substrates.

The sensor device 1500 is preferably oriented such that a normal (Z) to the substrates is oriented in an axial direction with respect to the shaft 1573. The two sensors S1, S2 are situated at an axial position between the two edges 1575, 1576 of the magnetized zone 1571, near the middle of the magnetized zone 1571. More specifically, if the magnetized zone 1571 has an axial length L1, the axial position of the first and second sensor S1, S2 is preferably offset from one of the edges 1575 of the magnetised zone 1571 by a distance µ having a value in the range from 40% to 60% of L1, or having a value in the range from 45% to 55% of L1, e.g. equal to about 50% of L1.

The distance dx between centres of the two sensors S1, S2 can be chosen substantially independent of the length L1, but may be chosen depending on a distance "g" between the shaft and the package of the sensor device 1500, and thus on the distances d1, d2 between the shaft and the first and second sensor S1, S2. The smaller the value of d1 and the larger the value of d2, the larger the value of ΔBz will be for a given torque exerted upon the shaft.

The values for the radial distance "g", and the radial distance "d1", and for the ratio of (dx/d1) mentioned for FIG. 12 are also applicable here.

The processing circuit of the magnetic sensor device 1500 is configured to determine a difference signal ΔBz between the magnetic field components Bz1, Bz2 in accordance with the formula: ΔBz=(Bz1-Bz2), and for outputting a signal or value indicative of the torque exerted upon the shaft. The processing circuit may e.g. be configured for determining a value T of the torque exerted upon the shaft as a predefined function of this difference signal, e.g. in accordance with the formula: T=f15(ΔBz), where f15 is a predefined function of the magnetic field difference. In a preferred embodiment, the torque T is calculated as a value proportional to the magnetic field difference ΔBz, e.g. in accordance with the formula: T=K15*(ΔBz), where K15 is a predefined constant. The value of K15 may be stored in a non-volatile memory inside the sensor device 1500.

**FIG. 16** shows an illustrative embodiment of a magnetoelastic torque sensor system 1670 comprising: a shaft 1673 having two axial zones 1671, 1672 that are magnetized in opposite circumferential directions, and a magnetic sensor device 1600 having two magnetic sensors S1, S2 which are spaced apart by a predefined distance dx along an X-axis which is parallel to the shaft 1673.

The torque sensor system 1600 of FIG. 16 may at first sight seem a variant of the torque sensor system 900 of FIG. 9, where the sensor device is rotated by 90° with respect to the X-axis, but in reality it is a different sensor device, because the sensors S1, S2 of this sensor device 1600 are configured for measuring a magnetic field component Br1, Br2 radially oriented with respect to the shaft, or By1, By2 relative to the sensor device, i.e. in a direction parallel to the substrates, and perpendicular to the X-axis defined by the two sensors S1, S2.

Each of the sensors S1 and S2 may comprise an integrated magnetic concentrator and two horizontal Hall elements arranged near the periphery of that IMC and situated on an imaginary line parallel to the Y-axis, or may comprise one or more vertical Hall elements oriented with their axis of maximum sensitivity oriented in the Y-direction, or may comprise one or more magneto-resistive (MR) elements arranged for measuring a magnetic field component oriented in the Y-direction.

The sensor device 1600 is oriented such that a normal (Z) to the substrates is oriented in a circumferential direction with respect to the shaft 1673. The two sensors S1, S2 are situated at axial positions in the vicinity of edges 1675, 1677 of the magnetized zones 1671, 1672.

More specifically, if the first axial zone 1671 has an axial length L1, and the second axial zone 1672 has a second axial length L2, and the two axial zones are spaced apart by a distance L3, preferably the distance dx between centres of the two sensors S1, S2 is equal to (L1+L3) with a tolerance margin of ±10% or ±5% or ±2%. Preferably the first sensor S1 and the second sensor S2 are slightly offset from the respective edges 1675, 1677 of the magnetised zones 1671, 1672 by a distance ε having a value in the range from 0 to 20% of L1, or having a value in the range from 3% to 15% of L1, e.g. equal to about 10% of L1, in order to reduce the effect of a mounting position offset. In FIG. 16, the sensor are situated at axial positions slightly shifted "inwards" with respect to the edges 1675, 1677, i.e. towards the middles of the magnetized zones 1671, 1672. In a variant, the two axial positions are shifted slightly "outwards" by a distance ε with respect to the edges 1675, 1677 (i.e. away from the middles of the magnetized zones 1671, 1672).

The processing circuit of the magnetic sensor device 1600 is configured to determine a difference signal ΔBy between the magnetic field components By1, By2 in accordance with the formula: ΔBy=(By1-By2), and for outputting a signal or value indicative of the torque exerted upon the shaft. The processing circuit may e.g. be configured for determining a value T of the torque exerted upon the shaft as a predefined function of this difference signal, e.g. in accordance with the formula: T=f16(ΔBy), where f16 is a predefined function of (ΔBy). In a preferred embodiment, the torque T is calculated as a value proportional to the magnetic field difference ΔBy, e.g. in accordance with the formula: T=K16*(ΔBy), where K16 is a predefined constant, which may be stored in a non-volatile memory inside the sensor device 1600.

The sensor device 900 is preferably mounted such that a radial distance "g" between the shaft and the packaged device 900 is at least 0.1 mm, or at least 0.3 mm, or at least 0.5 mm, and at most 5.0 mm. The radial distance d1 between the shaft and the sensor device 1600 is preferably at most 5.0 mm, or at most 4.0 mm, or at most 3.0 mm, or at most 2.0 mm, or at most 1.0 mm.

In a variant of FIG. 16 (not shown), the shaft has only one axial zone that is magnetized in a circumferential direction, e.g. zone 1671 is present and zone 1672 is absent. In this case, the first sensor S1 would still be positioned relative to the axial zone 1671 as illustrated in FIG. 16 (or at an axial distance on the left side of the edge 1675 of FIG. 16) and would still measure a signal By1 indicative of the magnetic field induced by the torque plus an external disturbance field (if present), whereas the second sensor S2 would only measure the external disturbance field (if present). It is an advantage of this variant that a shaft 1673 with only one axial magnetized zone is easier to produce, but the amplitude of the difference signal ΔBy will typically be smaller, e.g. only half of that of FIG. 16, thus the signal-to-noise ratio (SNR) of the signal ΔBy will be slightly worse than that of the torque sensor system of FIG. 16. The formula T=K*(ΔBy) can also be used in this case, but the value of K would typically be twice the value of K16 of FIG. 16.

In a further variant of FIG. 16 (not shown), the sensor device 1600 is rotated over an arbitrary angle about an axis parallel to the Y-axis, and passing through the first sensor S1. The formula T=K*(ΔBy) can also be used in this case.

**FIG. 17** shows an illustrative embodiment of a magnetoelastic torque sensor system 1770 comprising: a shaft 1773 having two axial zones 1771, 1772 that are magnetized in opposite circumferential directions, and a magnetic sensor device 1700 having two magnetic sensors S1, S2 which are spaced apart by a predefined distance dx along an X-axis which is parallel to the shaft 1773.

The torque sensor system 1700 of FIG. 17 can be considered as a variant of the torque sensor system 1000 of FIG. 10, where the sensor device is 90° rotated about its X-axis. Preferably, however, the sensor substrates of the sensor device 1700 are slightly shifted relative to the main substrate such that they are located closer to the shaft 1773 (for a given distance between the packaged device and the shaft).

In FIG. 17, the sensor device 1700 is oriented such that a normal (Z) to the substrates is oriented in a circumferential direction of the shaft 1773, i.e. in a direction tangential to a virtual circle concentric with the axis of the shaft 1773. Everything else described for the torque sensor system of FIG. 10 is also applicable here. For example, the torque exerted upon the shaft can be calculated as a function of the difference ΔBx, e.g. in accordance with the formula: T=f17(ΔBx), where f17 is a predefined function, e.g. as K17*ΔBx, where K17 is a predefined constant which may be stored in a non-volatile memory of the sensor device 1700.

In a variant of FIG. 17 (not shown), the shaft has only one axial zone that is magnetized in a circumferential direction, e.g. zone 1771 is present and zone 1772 is absent. In this case, the first sensor S1 would still be positioned relative to the axial zone 1771 as illustrated in FIG. 17. It is an advantage of this variant that a shaft with only one axial magnetized zone is easier to produce, but the amplitude of the difference signal ΔBx will typically be smaller, e.g. only half of that of FIG. 17, thus the signal-to-noise ratio (SNR) of the signal ΔBx will be slightly worse than that of the torque sensor system 1700 of FIG. 17. The formula T=K*(ΔBx) can also be used in this case, but the value of K would typically be twice the value of K17 of FIG. 17.

**FIG. 18** shows an illustrative embodiment of a magnetoelastic torque sensor system 1870 comprising: a shaft 1873 having two axial zones 1871, 1872 that are magnetized in the same circumferential direction (e.g. both clockwise or both counter-clockwise), and a magnetic sensor device 1800 having two magnetic sensors S1, S2 which are spaced apart by a predefined distance dx along an X-axis which is parallel to the shaft 1873.

The torque sensor system 1800 of FIG. 18 can be considered as a variant of the torque sensor system 900 of FIG. 9, wherein the second axial zone 1872 of the shaft 1873 is magnetized in the same circumferential direction as the first axial zone 1871, and wherein the first and second sensor S1, S2 are either both arranged at two axial positions near the inner edges 1875, 1876 of the two axial zones 1871, 1872 (as shown), in which case the distance dx is preferably equal to about (L3 ±2*ε) depending on whether the offsets are inwards or outwards; or wherein the first and second sensor S1, S2 are both arranged at two axial positions near the outer edges 1877, 1878 of the two axial zones 1871, 1872, in which case the distance dx is preferably equal to about (L1+L3+L2±2*ε). In both cases, the offset ε preferably has a value in the range from 0 to 20% of L1, or in the range from 3% to 15% of L1, e.g. equal to about 10% of L1.

Everything else described for the torque sensor system of FIG. 9 is also applicable here. For example, the torque exerted upon the shaft can be calculated as a function of the difference ΔBz, e.g. in accordance with the formula: T=f18(ΔBz), where f18 is a predefined function, e.g. as K18*ΔBz, where K18 is a predefined constant which may be stored in a non-volatile memory of the sensor device 1800.

In a variant of FIG. 18 (not shown), the shaft has only one axial zone that is magnetized in a circumferential direction, e.g. zone 1871 is present and zone 1872 is absent. In this case, the first sensor S1 would still be positioned relative to the axial zone 1871 as illustrated in FIG. 18 and would still measure a signal Bz1 indicative of the magnetic field induced by the torque plus an external disturbance field (if present), whereas the second sensor S2 would only measure the external disturbance field (if present). The formula T=K*(ΔBz) can also be used in this case, but the value of K would typically be twice the value of K18 of FIG. 18.

**FIG. 19** shows an illustrative embodiment of a magnetoelastic torque sensor system 1970 comprising: a shaft 1973 having two axial zones 1971, 1972 that are magnetized in the same circumferential direction (e.g. both clockwise or both counter-clockwise), and a magnetic sensor device 1900 having two magnetic sensors S1, S2 which are spaced apart by a predefined distance dx along an X-axis which is parallel to the shaft 1973.

The torque sensor system 1900 of FIG. 19 can be considered as a variant of the torque sensor system 1600 of FIG. 16, wherein the second axial zone 1972 of the shaft 1973 is magnetized in the same circumferential direction as the first axial zone 1971, and wherein the first and second sensor S1, S2 are either both arranged at two axial positions near the inner edges 1975, 1976 of the two axial zones 1971, 1972 (as shown), in which case the distance dx is preferably equal to about (L3 ±2*ε); or wherein the first and second sensor S1, S2 are both arranged at two axial positions near the outer edges 1977, 1978 of the two axial zones 1971, 1972, in which case the distance dx is preferably equal to about (L1+L3+L2±2*ε). In both cases, the offset ε preferably has a value in the range from 0 to 20% of L1, or in the range from 3% to 15% of L1, e.g. equal to about 10% of L1.

Everything else described for the torque sensor system of FIG. 16 is also applicable here. For example, the torque exerted upon the shaft can be calculated as a function of the difference ΔBy, e.g. in accordance with the formula: T=f19(ΔBy), where f19 is a predefined function, e.g. as K19*ΔBy, where K19 is a predefined constant which may be stored in a non-volatile memory of the sensor device 1900.

In a variant of FIG. 19 (not shown), the shaft has only one axial zone that is magnetized in a circumferential direction, e.g. zone 1971 is present and zone 1972 is absent. In this case, the first sensor S1 would still be positioned relative to the axial zone 1971 as illustrated in FIG. 19 and would still measure a signal By1 indicative of the magnetic field induced by the torque plus an external disturbance field (if present), whereas the second sensor S2 would only measure the external disturbance field (if present). The formula T=K*(ΔBy) can also be used in this case, but the value of K would typically be twice the value of K19 of FIG. 19.

The torque sensor systems illustrated in **FIG. 9 to FIG. 19** show only one magnetic sensor device, but the present invention is not limited thereto, and embodiments of the present invention may comprise more than one magnetic sensor device, for example two magnetic sensor devices mounted in the vicinity of the shaft, and being circumferentially spaced by an angle (e.g. θ), for example in the range from 165° to 180°. But another angular position may also work, for example of at least 30°, or at least 45°, or at least 60°, or at least 70°, or at least 85°, or at least 95°. Signals from these two magnetic sensor devices may be combined by one of the magnetic sensor devices, or by an external processor (not explicitly shown), to determine a value of the torque exerted upon the shaft.

In a variant, the torque sensor system comprises three magnetic sensor devices mounted in the vicinity of the shaft, circumferentially spaced by an angle (e.g. θ) of at least 30°, or at least 45°, or at least 60°, or at least 70°, or at least 85°, or at least 95°, e.g. by an angle in the range from 105° to 135°. Signals from these three magnetic sensor devices may be combined by one of the magnetic sensor devices, or by an external processor, to determine a value of the torque exerted upon the shaft.

In another variant, the torque sensor system comprises four magnetic sensor devices mounted in the vicinity of the shaft, circumferentially spaced by an angle (e.g. θ) of at least 30°, or at least 45°, or at least 60°, or at least 70°, e.g. by an angle in the range from 80° to 100°. Signals from these four magnetic sensor devices may be combined by one of the magnetic sensor devices, or by an external processor, to determine a value of the torque exerted upon the shaft.

In any of these variants that comprise multiple sensor devices angularly spaced from each other in a circumferential direction around the shaft, the combination of signals may use parameters which are determined during a calibration procedure, and which are stored in a non-volatile memory of the magnetic sensor device. It is an advantage of using multiple sensor devices that mechanical offset or mechanical play, in particular in the radial direction of the shaft, may be reduced, or at least partially compensated by combining signals from these multiple sensor devices.

FIG. 20 to FIG. 22B show further magnetoelastic torque sensor systems proposed by the present invention, comprising a shaft having three axial zones which are magnetized in alternating circumferential directions, and one or more magnetic sensor devices arranged in the vicinity of said shaft, each magnetic sensor device having at least two magnetic sensors spaced apart in the axial direction, and optionally also a processing substrate. Sensor devices as described in FIG. 1 to FIG. 8 may be used, but that is not absolutely required. For example, if the torque sensor system comprises multiple magnetic sensor devices, one of them may comprise a processing substrate and two sensor substrates, while the other magnetic sensor devices may only require two sensor substrates. As another example, if the torque sensor system comprises an external processor, e.g. a display and computing device of an E-bike, the magnetic sensor devices may only comprise sensor substrates.

The processing substrate, if present, may be a CMOS substrate. The sensor substrates may be compound semiconductor substrates comprising materials from the III-V group, e.g. Ga-As or In-As. Each of the sensor substrates may comprise one or more horizontal Hall elements configured for measuring a magnetic field component oriented in a radial direction with respect to the shaft.

**FIG. 20** shows an illustrative embodiment of a magnetoelastic torque sensor system 2070 comprising: a shaft 2073 having three axial zones, comprising a first axial zone 2071a magnetized in a first circumferential direction (e.g. clockwise) and a second axial zone 2071b magnetized in a second circumferential direction opposite the first circumferential direction, and a third axial zone 2071c magnetized in a third circumferential direction opposite the second circumferential direction. The system further comprises at least one magnetic sensor device 2000 having two magnetic sensors S1, S2 which are spaced apart by a predefined distance dx along an X-axis which is parallel to the shaft 2073.

The torque sensor system 2000 of FIG. 20 can be considered as a variant of the torque sensor system 1100 of FIG. 11, wherein the shaft has two more axial section. Everything else described for the torque sensor system of FIG. 11 is also applicable here. For example, the torque exerted upon the shaft can be calculated as a function of the difference ΔBz, e.g. in accordance with the formula: T=f20(ΔBz), where f20 is a predefined function, e.g. as K20*ΔBz, where K20 is a predefined constant which may be stored in a non-volatile memory of the sensor device 2000.

The first axial zone 2071a has a first axial length L1, the second axial zone 2071b has a second axial length L2, and the third axial zone 2071c has a third axial length L3. Preferably L1 = L2, and L2= L3.

The first axial zone 2071a is spaced from the second axial zone 2071b by a distance dA, and the third axial zone 2071c is spaced from the second axial zone 2071b by a distance dB. Preferably dA is substantially equal to dB, e.g. is equal to dB. The value of dA may be a value in the range from 0.5 mm to 5.0 mm, for example equal to about 1.0 mm.

The active surface of the sensors S1, S2 is spaced from the shaft by a distance ds. The value of ds may be a value in the range from 0.5 mm to 2.5 mm, for example equal to about 1.0 mm. Preferably the value of ds is substantially equal to dA, e.g. is equal to dA.

The device 2000 may have an encapsulation that is spaced from the shaft by a distance g, also referred to as "clearance".

A center of the first sensor S1 is spaced from a center of the second sensor S2 by a distance dx. The value of dx may be smaller than or equal to L2 (i.e. dx≤L2). Preferably, the value of dx is smaller than L2 (i.e. dx<L2). More preferably dx=L2-(2* ε), where L2 is the length of the central axial zone 2071b, and ε is an inwards offset from a circular edge 2075, 2076 of the central zone.

In preferred embodiments one or more or all of the following statements are true:
i) dx≤L2, or dx<L2, e.g. dx=L2-(2* ε) and ε>0;
ii) dA/dB is a value from 50% to 200%, or from 80% to 125%, or from 90% to 110%;
iii) ds/dA is a value from 50% to 200%, or from 80% to 125%, or from 90% to 110%;

In an embodiment, i) dx≤L2, and ii) dA/dB is a value from 50% to 200%.

In an embodiment, i) dx≤L2, and iii) ds/dA is a value from 50% to 200%.

In an embodiment, i) dx≤L2, and ii) dA/dB is a value from 50% to 200%, and iii) ds/dA is a value from 50% to 200%.

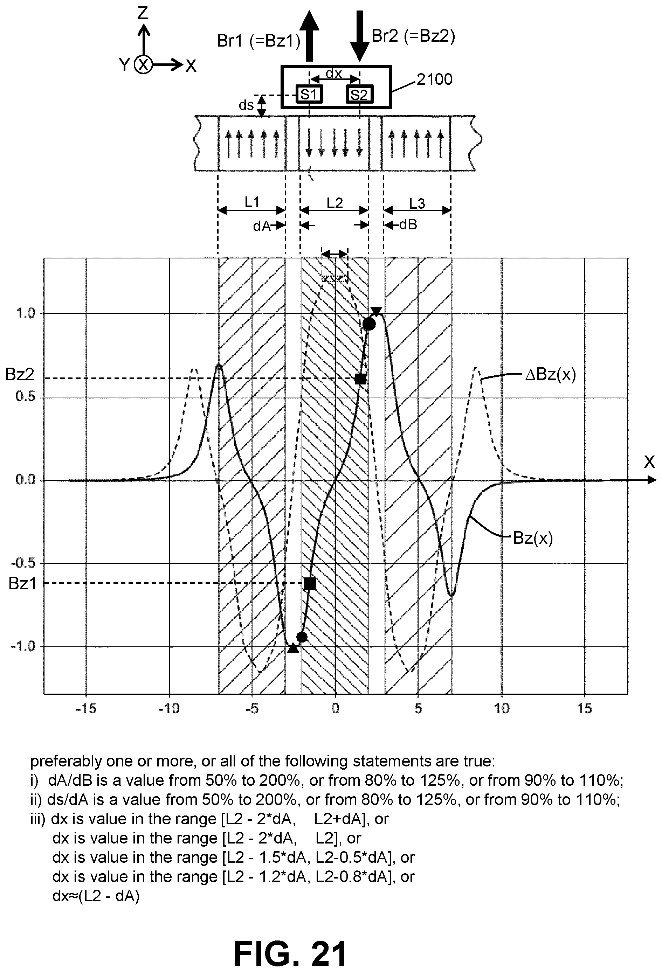

**FIG. 21** shows simulation results for an arrangement as illustrated in FIG. 20, where dA=dB=ds, and where L1=L2=L3, but the present invention is not limited hereto. The graph shows the value of Bz (in arbitrary units) as a function of axial displacement along the X-direction, at a radial distance ds from the shaft.

As can be appreciated from this graph, if the two sensors S1, S2 would be spaced apart in the X-direction by positions corresponding to the triangles, i.e. if dx=L2+d, the value of (Bz1-Bz2) would be maximal, but the axial mounting position of the sensor device would need to be accurate, because a small shift of the curve to the left or the right would cause (Bz1-Bz2) to decrease.

If the two sensors S1, S2 would be spaced apart in the X-direction by positions corresponding to the circles, i.e. if dx is equal to about L2, the value of (Bz1-Bz2) would be close to maximal, but the axial mounting position of the sensor device would be somewhat relaxed, because a shift to the left/right would cause the value of Bz1 to increase/decrease (in absolute value) and would cause the value of Bz2 to decrease/increase (in absolute value), but the increase and decrease would not be same, thus there is some compensation but the compensation is not ideal.

If the two sensors S1, S2 would be spaced apart in the X-direction by positions corresponding to the squares, i.e. if dx is equal to about (L2-dA), the value of (Bz1-Bz2) would have an amplitude of about 60% of the maximal, i.e. the signal-to-noise ratio would loose approximately 1 bit, but the axial mounting position of the sensor device would be strongly relaxed, because a shift to the left/right would cause the value of Bz1 to increase/decrease (in absolute value) and would cause the value of Bz2 to decrease/increase (in absolute value) by approximately the same amount, thus the compensation is close to ideal.

The dotted curve in FIG. 21 shows the value of ΔBz=(Bz1-Bz2) as a function of the mounting position of a sensor device where dx=(L2-dA), corresponding to the squares. As can be seen, the dotted curve has a substantially "flat top", meaning that the value of ΔBz is substantially constant (e.g. varies less than ± 3%) for mounting offsets up to about 33% of L2. It could be stated that this value of dx is optimal, because a ratio of the axial offset (±33% of L2 about the envisioned position) and the variation of ΔBz (less than ± 3%) is maximized. But of course, the invention will also work very well if dx is not exactly equal to (L2-dA), but has a value in the range from (L2-2*dA) to (L2+dA), or has a value in the range from (L2-2*dA) to (L2), or has a value in the range from (L2-1.5*dA) to (L2-0.5*dA), or has a value in the range from (L2-1.2*dA) to (L2-0.8*dA). Referring back to FIG. 20, this means that preferably ε is a value in the range from 0 to 2*dA, more preferably a value in the range from 0.5*dA to 1.5*dA, or from 0.8*dA to 1.2*dA.

In an embodiment, the value of dA and dB may be a value in the range from 0.5 mm to 1.5 mm, e.g. equal to about 1.0 mm; and the value of L1=L2=L3 may be a value in the range from 5.0 mm to 15.0 mm, e.g. equal to about 8.7 mm, or equal to about 13.7 mm; and the diameter of the shaft may be a value in the range from 10 mm to 30 mm, or in the range from 15 mm to 25 mm, e.g. equal to about 17 mm.

**FIG. 22A** shows a side view, and **FIG. 22B,** shows a front view of a torque sensor system like that of FIG. 20 or FIG. 21, having two magnetic sensor devices 2200a, 2200b, mounted in the vicinity of the shaft 2273, and angularly spaced in a circumferential direction by an angle of at least at least 30°, or at least 45°, or at least 60°, or at least 70°, or at least 85°, or at least 95°, or at least 120°, or at least 150°, e.g. by approximately 180°. As can be seen, the first sensor S1 and the second sensor S2 are situated in a space between a first virtual plane Ω1 and a second virtual plane Ω2, the first virtual plane Ω1 oriented perpendicular to the axial direction (e.g. X) of the shaft and intersecting the shaft at a first axial position situated between the first 2271a and the second 2271b magnetized section, the second virtual plane Ω2 oriented perpendicular to the axial direction of the shaft and intersecting the shaft at a second axial position situated between the second 2271b and the third 2271c magnetized section.

Referring to **FIG. 22B,** when the shaft is mounted in a housing between two sensor devices 2200a, 2200b, ideally the first clearance c1 and the second clearance c2 would be substantially equal to each other, but in practice, there may be some radial position offset of the shaft, which may cause c1 to increase and c2 to decrease, or vice versa. By combining the difference signals obtained from both magnetic sensor devices, the influence of such radial offset can be reduced. When using sensor devices as explained in FIG. 21, the system is highly robust against both axial and radial offset.

This effect can also be obtained by combining the signals obtained from three magnetic sensor devices (not shown), circumferentially spaced by at least 30°, or at least 45°, or at least 60°, or at least 70°, or at least 85°, or at least 95°, e.g. circumferentially spaced by multiples of approximately 120° ± 15°. It is noted that the angular offsets between the sensor devices does not need to be constant. For example, an angular offset between a first device and a second device may be equal to 90°, and an angular offset between the second device and a third device may be equal to 90°, and the angular offset between the first and the third device may be equal to 180°.

This effect can also be obtained by combining the signals obtained from four magnetic sensor devices (not shown) circumferentially spaced by at least 30°, or at least 45°, or at least 60°, or at least 70°, e.g. circumferentially spaced by multiples of approximately 90° ± 15°.

The principle of using a plurality of magnetic sensor devices circumferentially spaced apart around the shaft, e.g. as illustrated in**FIG. 22B,** or variants thereof with three or four sensor devices, can also be used in combination with the torque sensor systems illustrated in FIG. 9 to FIG. 19. By combining the signals obtained from multiple sensor devices, the influence of radial play (or radial position offset) of the shaft relative to the housing can be reduced. Or stated in other words: the robustness against radial offset of the shaft can be improved.

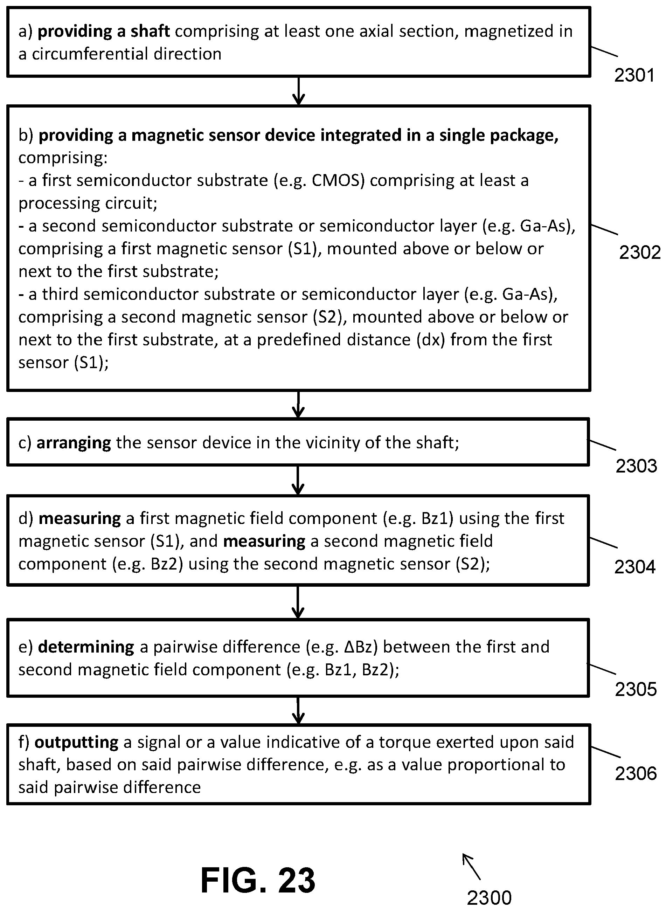

**FIG. 23** shows a flow-chart of a method 2300 of determining a torque exerted upon a shaft. The method comprises the following steps:
a) providing in step 2301 a shaft comprising at least one axial section, magnetized in a circumferential direction;
b) providing in step 2302 a magnetic sensor device integrated in a single package, comprising:
   - a first semiconductor substrate (e.g. a CMOS substrate) comprising at least a processing circuit;
   - a second semiconductor substrate or a semiconductor layer (e.g. Ga-As), comprising a first magnetic sensor (S1), mounted above or below or next to the first substrate;
   - a third semiconductor substrate or semiconductor layer (e.g. Ga-As), comprising a second magnetic sensor (S2), mounted above or below or next to the first substrate, at a predefined distance (dx) from the first sensor (S1);
c) arranging in step 2303 the sensor device in the vicinity of the shaft;
d) measuring in step 2304 a first magnetic field component (e.g. Bz1) using the first magnetic sensor (S1), and measuring a second magnetic field component (e.g. Bz2) parallel to the first magnetic field component (e.g. Bz1), using the second magnetic sensor (S2);
e) determining in step 2305 a pairwise difference (e.g. ΔBz) between the first and the second magnetic field component (e.g. Bz1, Bz2);
f) outputting in step 2306 a signal or a value indicative of a torque exerted upon said shaft, based on said pairwise difference, e.g. as a predefined function of said pairwise difference, e.g. as a value proportional to said pairwise difference.

Step a) may comprise: providing a shaft having only one axial section (e.g. as illustrated in FIG. 11 to FIG. 15) that is magnetized in a circumferential direction, or providing a shaft having two axial sections that are magnetized in opposite circumferential directions (e.g. as illustrated in FIG. 9, FIG. 10, FIG. 16, FIG. 17) , or providing a shaft having two axial sections magnetized in the same circumferential direction (e.g. as illustrated in FIG. 18, FIG. 19).

In the sensor device provided in step b), the first semiconductor substrate is electrically connected to the second semiconductor substrate and to the third semiconductor substrate, e.g. by means of at least one RDL layer, or by means of bondwires. The magnetic sensors of this sensor device may be a 1D magnetic sensor comprising one or more Horizontal Hall elements, e.g. connected in series or in parallel (e.g. in FIG. 9, FIG. 11, FIG. 15, FIG. 18) or comprising one or more vertical Hall elements or magnetoresistive elements (e.g. in FIG. 10, FIG. 12 to FIG. 14, FIG. 16 to FIG. 17, FIG. 19).

Step c) may comprise: arranging the sensor device relative to the shaft as illustrated in any of FIG. 9 to FIG. 19. In some cases, this means that the distance dx between the sensor elements and the number and/or dimensions of the axial zones and/or a distance between the axial zones need to satisfy a predefined relationship.

The sensor device provided in step b) may comprise a non-volatile memory comprising data of a predefined function, such as e.g. coefficients of a polynomial function, or a lookup-table, or a predefined constant, allowing the processing circuit to calculate the torque exerted upon the shaft.

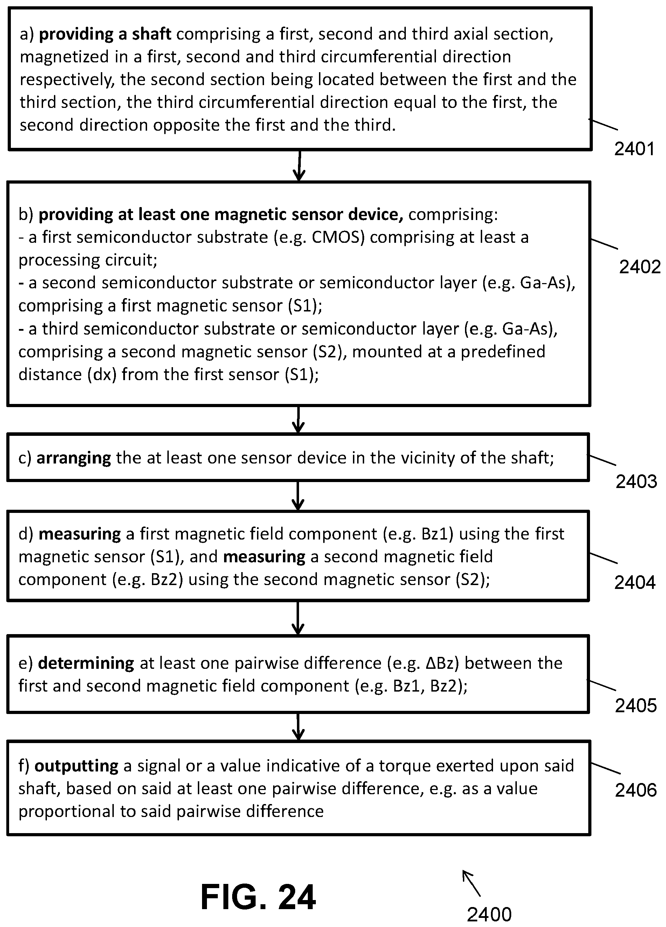

**FIG. 24** shows a flow-chart of a method 2400 of determining a torque exerted upon a shaft, which can be seen as a special case, or a variant of the method 2300 of FIG. 23. The method 2400 comprises the following steps:
a) providing in step 2401 a shaft comprising a first, sa econd and a third axial section, magnetized in a first, second and third circumferential direction respectively, the second section being located between the first and the third section, the third circumferential direction being equal to the first, the second circumferential direction being opposite the first and the third;
b) providing in step 2402 at least one magnetic sensor device, comprising:
   - a first semiconductor substrate (e.g. a CMOS substrate) comprising at least a processing circuit;
   - a second semiconductor substrate or a semiconductor layer (e.g. Ga-As), comprising a first magnetic sensor (S1), e.g. at least one horizontal Hall plate;
   - a third semiconductor substrate or semiconductor layer (e.g. Ga-As), comprising a second magnetic sensor (S2), e.g. at least one horizontal Hall plate, the second sensor being situated at a predefined distance "dx" from the first sensor (S1);
c) arranging in step 2403 the at least one sensor device in the vicinity of the shaft, e.g. as illustrated in any of FIG. 20 to FIG. 22B;
d) measuring in step 2404 a first magnetic field component (e.g. Bz1) using the first magnetic sensor (S1), and measuring a second magnetic field component (e.g. Bz2) parallel to the first magnetic field component (e.g. Bz1), using the second magnetic sensor (S2) of the at least one magnetic sensor device;
e) determining in step 2405 at least one pairwise difference (e.g. ΔBz) between the first and the second magnetic field component (e.g. Bz1, Bz2);
f) outputting in step 2406 a signal or a value indicative of a torque exerted upon said shaft, based on said at least one pairwise difference, e.g. as a predefined function of said pairwise difference, e.g. as a value proportional to said pairwise difference.

The shaft may have three axial zones having dimensions L1, L2, L3 as illustrated in FIG. 20 to FIG. 22B, spaced apart by a distance dA, dB, and the dx between the sensor elements may be chosen as explained in FIG. 21.

## Claims

1. A magnetoelastic torque sensor system, comprising:
- a shaft comprising at least one axial section that is magnetized in a circumferential direction;
- a magnetic sensor device arranged in the vicinity of the shaft, and comprising three semiconductor substrates, including a first semiconductor substrate (109) comprising at least a processing circuit, a second semiconductor substrate (106a) comprising a first magnetic sensor (S1), and a third semiconductor substrate (106b) comprising a second magnetic sensor (S2), each magnetic sensor being configured for measuring a magnetic field component of a magnetic field generated by said shaft when a torque is exerted on the shaft;
wherein the first, second and third semiconductor substrates (109, 106a, 106b) are incorporated in a single packaged device having a plurality of terminals electrically connected to the first substrate (109); and
wherein the single packaged device is a **wafer-level-packaged** device **or** a device comprising a **lead frame,** wherein the first semiconductor substrate (109) is **arranged between** the second and the third semiconductor substrate (106a, 106b); and
wherein the processing circuit is configured for determining a pairwise difference between the measured field components, and for outputting a signal indicative of a torque exerted upon said shaft, based on said pairwise difference.

2. A magnetoelastic torque sensor system according to claim 1,
wherein the magnetic sensor device further comprises means for applying a known biasing current to the magnetic sensors and means for measuring voltages over the magnetic sensors, or further comprises means for applying a known biasing voltage over said magnetic sensors and means for measuring currents flowing through the magnetic sensors,
and wherein the processing circuit is configured for estimating a first temperature of the first sensor (S1), and a second temperature of the second sensor (S2) based on the applied current and the measured voltages or based on the applied voltage and the measured currents, and for temperature-compensating the signals obtained from the first and second sensor, and for determining said difference based on the temperature compensated first and second sensor signal.

3. A magnetoelastic torque sensor system according to any of the previous claims,
wherein the first substrate (109) further comprises a temperature sensor for measuring a temperature of the main substrate, and wherein the processing circuit is configured for temperature correcting the sensor signals, and for determining said difference based on the temperature corrected sensor signals.

4. A magnetoelastic torque sensor system according to any of the previous claims,
wherein each of the sensor substrates (106a, 106b) further comprises a temperature sensor for measuring a temperature of said sensor substrate, and
wherein the processing circuit is configured for temperature correcting the sensor signals, and for determining said difference based on the temperature corrected sensor signals.

5. A magnetoelastic torque sensor system according to any of the previous claims,
wherein the first semiconductor substrate (109) mainly comprise silicon; and
wherein the second and third semiconductor substrate (106a, 106b) mainly comprise silicon, and/or are discrete silicon substrates.

6. A magnetoelastic torque sensor system according to any of the claims 1 to 4,
wherein the first semiconductor substrate (109) mainly comprise silicon; and
wherein the second and third semiconductor substrate (106a, 106b) comprise a compound semiconductor material selected from the III-V-group.

7. A magnetoelastic torque sensor system according to any of the previous claims,
wherein the sensor device is a wafer-level packaged device;
wherein the first semiconductor substrate (109) is situated between the second and the third semiconductor substrate (106a, 106b);
- and wherein the first semiconductor substrate (109) is electrically connected to the second semiconductor substrate 106a) and to the third semiconductor substrate (106b) by means of at least one redistribution layer (RDL).

8. A magnetoelastic torque sensor system according to any of the claims 1 to 6,
wherein the magnetic sensor device further comprises a lead frame;
wherein the first substrate (709) is situated between the second and the third semiconductor substrate (706a, 706b) on a single side of the lead frame;
- and wherein the first semiconductor substrate (709) is electrically connected to the second semiconductor substrate (706a) and to the third semiconductor substrate (706b) by means of bond wires.

9. A magnetoelastic torque sensor system (1070; 1770) according to any of the previous claims,
wherein the shaft comprises at least a first axial section magnetized in a first circumferential direction, and optionally also a second axial section magnetized in a second circumferential direction opposite the first circumferential direction;
and wherein the magnetic sensor device is oriented relative to the shaft such that a first axis (X) defined by a virtual line passing through the first sensor (S1) and the second sensor (S2) is parallel to the shaft;
and wherein the first sensor (S1) and the second sensor (S2) are configured for measuring a first and a second magnetic field component (Bax1, Bax2) oriented parallel to the shaft;
and wherein the first sensor (S1) is situated at a first axial position near a middle of the first magnetized axial section, and wherein the second sensor (S2) is situated near a middle of the second magnetized axial section if present.

10. A magnetoelastic torque sensor system (1370; 1570) according to any of the claims 1 to 8,
wherein the magnetic sensor device is oriented relative to the shaft such that a first axis (X) defined by a virtual line passing through the first sensor (S1) and the second sensor (52) is radially oriented with respect to the shaft;
and wherein the first sensor (S1) and the second sensor (S2) are configured for measuring a first and a second magnetic field component (Bax1, Bax2) oriented parallel to the shaft;
and wherein the first sensor (S1) is situated at an axial position near a middle of the magnetized axial section at a first radial distance (d1) from the shaft,
and wherein the second sensor (S2) is situated at the same axial position as the first sensor (S1) but at a second radial distance (d2) from the shaft, larger than the first radial distance (d1).

11. A magnetoelastic torque sensor system (1170) according to any of the claims 1 to 8,
wherein the magnetic sensor device is oriented relative to the shaft such that a first axis (X) defined by a virtual line passing through the first sensor (S1) and the second sensor (S2) is parallel to the shaft;
and wherein the first sensor (S1) and the second sensor (S2) are configured for measuring a first and a second magnetic field component (Br1, Br2) radially oriented with respect to the shaft;
and wherein the first sensor (S1) is situated at a first axial position near a first edge (1175) of the magnetized axial section (1171), and wherein the second sensor (S2) is situated at a second axial position near a second edge (1176) of the magnetized axial section (1171).

12. A magnetoelastic torque sensor system (1270; 1470) according to any of the claims 1 to 8,
wherein the magnetic sensor device is oriented relative to the shaft such that a first axis (X) defined by a virtual line passing through the first sensor (S1) and the second sensor (S2) is radially oriented with respect to the shaft;
and wherein the first sensor (S1) and the second sensor (S2) are configured for measuring a first and a second magnetic field component (Br1, Br2) radially oriented with respect to the shaft;
and wherein the first and the second sensor (S1, S2) are situated at an axial position near a first edge (1275; 1475) of the magnetized axial section (1271; 1471).

13. A magnetoelastic torque sensor system (970; 1670) according to any of the claims 1 to 8,
wherein the shaft comprises at least a first axial section (971; 1671) magnetized in a first circumferential direction, and optionally also a second axial section (972; 1672) magnetized in a second circumferential direction opposite the first circumferential direction;
and wherein the magnetic sensor device is oriented relative to the shaft such that a first axis (X) defined by a virtual line passing through the first sensor (S1) and the second sensor (S2) is parallel to the shaft;
and wherein the first sensor (S1) and the second sensor (S2) are configured for measuring a first and a second magnetic field component (Br1, Br2) radially oriented with respect to the shaft;
and wherein the first sensor (S1) is situated at a first axial position near an edge (975; 1675) of the first magnetized axial section, and wherein the second sensor (S2) is situated near an edge (977; 1677) of the second magnetized axial section if present.

14. A magnetoelastic torque sensor system (1870; 1970) according to any of the claims 1 to 8,
wherein the shaft comprises a first axial section (1871; 1971) magnetized in a first circumferential direction, and a second axial section (1872; 1972) also magnetized in the first circumferential direction;
and wherein the magnetic sensor device is oriented relative to the shaft such that a first axis (X) defined by a virtual line passing through the first sensor (S1) and the second sensor (S2) is parallel to the shaft;
and wherein the first sensor (S1) and the second sensor (S2) are configured for measuring a first and a second magnetic field component (Br1, Br2) radially oriented with respect to the shaft;
and wherein the first sensor (S1) and the second sensor (S2) are either both situated near inner edges of the respective axial sections, or are either both situated near outer edges of the respective axial sections.

15. A method (2000) of measuring a torque exerted upon a shaft, comprising the steps of:
a) providing (2001) a shaft comprising at least one axial section, that is magnetized in a circumferential direction;
b) providing (2002) a magnetic sensor device in the form of a single packaged device comprising at least three semiconductor substrates, including: a first semiconductor substrate comprising at least a processing circuit; a second semiconductor substrate comprising a first magnetic sensor (51); and a third semiconductor substrate comprising a second magnetic sensor (S2), wherein the magnetic sensor device is a wafer-level-packaged device or a device comprising a lead frame, and wherein the first semiconductor substrate (109) is **arranged between** the second and the third semiconductor substrate (106a, 106b);
c) arranging (2003) the sensor device in the vicinity of the shaft;
d) measuring (2004) a first magnetic field component using the first magnetic sensor (S1); and measuring a second magnetic field component using the second magnetic sensor (S2);
e) determining (2005) a pairwise difference between the magnetic field components with the use of the processing circuit;
f) outputting (2006) a signal indicative of a torque exerted upon said shaft, based on said pairwise difference.

## Patentansprüche

1. Magnetoelastisches Drehmomentsensorsystem, umfassend:
- eine Welle, die mindestens einen axialen Abschnitt umfasst, der in einer Umfangsrichtung magnetisiert ist;
- eine Magnetsensorvorrichtung, die in der Nähe der Welle angeordnet ist und drei Halbleitersubstrate umfasst, einschließlich eines ersten Halbleitersubstrats (109), das mindestens eine Verarbeitungsschaltung umfasst, eines zweiten Halbleitersubstrats (106a), das einen ersten Magnetsensor (S1) umfasst, und eines dritten Halbleitersubstrats (106b), das einen zweiten Magnetsensor (S2) umfasst, wobei jeder Magnetsensor zum Messen einer Magnetfeldkomponente eines Magnetfelds ausgelegt ist, das von der Welle generiert wird, wenn ein Drehmoment auf die Welle ausgeübt wird;
wobei das erste, das zweite und das dritte Halbleitersubstrat (109, 106a, 106b) in eine einzelne eingehauste Vorrichtung mit einer Vielzahl von Anschlüssen eingebunden sind, die elektrisch mit dem ersten Substrat (109) verbunden sind; und
wobei die einzelne eingehauste Vorrichtung eine auf Waferebene eingehauste Vorrichtung oder eine Vorrichtung ist, die einen Leiterrahmen umfasst, wobei das erste Halbleitersubstrat (109) zwischen dem zweiten und dem dritten Halbleitersubstrat (106a, 106b) angeordnet ist; und
wobei die Verarbeitungsschaltung zum Ermitteln einer paarweisen Differenz zwischen den gemessenen Feldkomponenten und zum Ausgeben eines Signals, das ein auf die Welle ausgeübtes Drehmoment angibt, auf Grundlage der paarweisen Differenz, ausgelegt ist.

2. Magnetoelastisches Drehmomentsensorsystem nach Anspruch 1,
wobei die Magnetsensorvorrichtung ferner Mittel zum Anlegen eines bekannten Vorspannungsstroms an die Magnetsensoren und Mittel zum Messen von Spannungen an den Magnetsensoren umfasst oder ferner Mittel zum Anlegen einer bekannten Vorspannung an die Magnetsensoren und Mittel zum Messen von durch die Magnetsensoren fließenden Strömen umfasst,
und wobei die Verarbeitungsschaltung zum Abschätzen einer ersten Temperatur des ersten Sensors (S1) und einer zweiten Temperatur des zweiten Sensors (S2) auf Grundlage des angelegten Stroms und der gemessenen Spannungen oder auf Grundlage der angelegten Spannung und der gemessenen Ströme und zum Temperaturkompensieren der vom ersten und vom zweiten Sensor erhaltenen Signale und zum Ermitteln der Differenz auf Grundlage des temperaturkompensierten ersten und zweiten Sensorsignals ausgelegt ist.

3. Magnetoelastisches Drehmomentsensorsystem nach einem der vorhergehenden Ansprüche,
wobei das erste Substrat (109) ferner einen Temperatursensor zum Messen einer Temperatur des Hauptsubstrats umfasst und wobei die Verarbeitungsschaltung zum Temperaturkorrigieren der Sensorsignale und zum Ermitteln der Differenz auf Grundlage der temperaturkorrigierten Sensorsignale ausgelegt ist.

4. Magnetoelastisches Drehmomentsensorsystem nach einem der vorhergehenden Ansprüche,
wobei jedes der Sensorsubstrate (106a, 106b) ferner einen Temperatursensor zum Messen einer Temperatur des Sensorsubstrats umfasst und
wobei die Verarbeitungsschaltung zum Temperaturkorrigieren der Sensorsignale und zum Ermitteln der Differenz auf Grundlage der temperaturkorrigierten Sensorsignale ausgelegt ist.

5. Magnetoelastisches Drehmomentsensorsystem nach einem der vorhergehenden Ansprüche,
wobei das erste Halbleitersubstrat (109) hauptsächlich Silizium umfasst; und
wobei das zweite und das dritte Halbleitersubstrat (106a, 106b) hauptsächlich Silizium umfassen und/oder diskrete Siliziumsubstrate sind.

6. Magnetoelastisches Drehmomentsensorsystem nach einem der Ansprüche 1 bis 4,
wobei das erste Halbleitersubstrat (109) hauptsächlich Silizium umfasst; und
wobei das zweite und das dritte Halbleitersubstrat (106a, 106b) ein Verbindungshalbleitermaterial umfassen, das aus der III-V-Gruppe ausgewählt ist.

7. Magnetoelastisches Drehmomentsensorsystem nach einem der vorhergehenden Ansprüche,
wobei die Sensorvorrichtung eine auf Waferebene eingehauste Vorrichtung ist;
wobei das erste Halbleitersubstrat (109) zwischen dem zweiten und dem dritten Halbleitersubstrat (106a, 106b) angeordnet ist;
und wobei das erste Halbleitersubstrat (109) elektrisch mittels mindestens einer Umverdrahtungsschicht (RDL) mit dem zweiten Halbleitersubstrat (106a) und mit dem dritten Halbleitersubstrat (106b) verbunden ist.

8. Magnetoelastisches Drehmomentsensorsystem nach einem der Ansprüche 1 bis 6,
wobei die Magnetsensorvorrichtung ferner einen Leiterrahmen umfasst;
wobei das erste Substrat (709) zwischen dem zweiten und dem dritten Halbleitersubstrat (706a, 706b) auf einer einzigen Seite des Leiterrahmens angeordnet ist;
und wobei das erste Halbleitersubstrat (709) elektrisch mittels Bonddrähten mit dem zweiten Halbleitersubstrat (706a) und mit dem dritten Halbleitersubstrat (706b) verbunden ist.

9. Magnetoelastisches Drehmomentsensorsystem (1070; 1770) nach einem der vorhergehenden Ansprüche,
wobei die Welle mindestens einen ersten axialen Abschnitt, der in einer ersten Umfangsrichtung magnetisiert ist, und optional auch einen zweiten axialen Abschnitt umfasst, der in einer der ersten Umfangsrichtung entgegengesetzten zweiten Umfangsrichtung magnetisiert ist;
und wobei die Magnetsensorvorrichtung so relativ zur Welle ausgerichtet ist, dass eine erste Achse (X), die durch eine virtuelle Linie definiert ist, die durch den ersten Sensor (S1) und den zweiten Sensor (S2) verläuft, parallel zur Welle ist;
und wobei der erste Sensor (S1) und der zweite Sensor (S2) zum Messen einer ersten und einer zweiten Magnetfeldkomponente (Bax1, Bax2) ausgelegt sind, die parallel zur Welle ausgerichtet sind;
und wobei der erste Sensor (S1) an einer ersten axialen Position in der Nähe einer Mitte des ersten magnetisierten axialen Abschnitts angeordnet ist und wobei der zweite Sensor (S2) in der Nähe einer Mitte des zweiten magnetisierten axialen Abschnitts angeordnet ist, falls vorhanden.

10. Magnetoelastisches Drehmomentsensorsystem (1370; 1570) nach einem der Ansprüche 1 bis 8,
wobei die Magnetsensorvorrichtung so relativ zur Welle ausgerichtet ist, dass eine erste Achse (X), die durch eine virtuelle Linie definiert ist, die durch den ersten Sensor (S1) und den zweiten Sensor (S2) verläuft, in Bezug auf die Welle radial ausgerichtet ist;
und wobei der erste Sensor (S1) und der zweite Sensor (S2) zum Messen einer ersten und einer zweiten Magnetfeldkomponente (Bax1, Bax2) ausgelegt sind, die parallel zur Welle ausgerichtet sind;
und wobei der erste Sensor (S1) an einer axialen Position in der Nähe einer Mitte des magnetisierten axialen Abschnitts in einem ersten radialen Abstand (d1) von der Welle angeordnet ist
und wobei der zweite Sensor (S2) an der gleichen axialen Position wie der erste Sensor (S1), aber in einem zweiten radialen Abstand (d2) von der Welle angeordnet ist, der größer als der erste radiale Abstand (d1) ist.

11. Magnetoelastisches Drehmomentsensorsystem (1170) nach einem der Ansprüche 1 bis 8,
wobei die Magnetsensorvorrichtung so relativ zur Welle ausgerichtet ist, dass eine erste Achse (X), die durch eine virtuelle Linie definiert ist, die durch den ersten Sensor (S1) und den zweiten Sensor (S2) verläuft, parallel zur Welle ist;
und wobei der erste Sensor (S1) und der zweite Sensor (S2) zum Messen einer ersten und einer zweiten Magnetfeldkomponente (Br1, Br2) ausgelegt sind, die radial in Bezug auf die Welle ausgerichtet sind;
und wobei der erste Sensor (S1) an einer ersten axialen Position in der Nähe eines ersten Rands (1175) des magnetisierten axialen Abschnitts (1171) angeordnet ist und wobei der zweite Sensor (S2) an einer zweiten axialen Position in der Nähe eines zweiten Rands (1176) des magnetisierten axialen Abschnitts (1171) angeordnet ist.

12. Magnetoelastisches Drehmomentsensorsystem (1270; 1470) nach einem der Ansprüche 1 bis 8,
wobei die Magnetsensorvorrichtung so relativ zur Welle ausgerichtet ist, dass eine erste Achse (X), die durch eine virtuelle Linie definiert ist, die durch den ersten Sensor (S1) und den zweiten Sensor (S2) verläuft, in Bezug auf die Welle radial ausgerichtet ist;
und wobei der erste Sensor (S1) und der zweite Sensor (S2) zum Messen einer ersten und einer zweiten Magnetfeldkomponente (Br1, Br2) ausgelegt sind, die radial in Bezug auf die Welle ausgerichtet sind;
und wobei der erste und der zweite Sensor (S1, S2) an einer axialen Position in der Nähe eines ersten Rands (1275; 1475) des magnetisierten axialen Abschnitts (1271; 1471) angeordnet sind.

13. Magnetoelastisches Drehmomentsensorsystem (970; 1670) nach einem der Ansprüche 1 bis 8,
wobei die Welle mindestens einen ersten axialen Abschnitt (971; 1671), der in einer ersten Umfangsrichtung magnetisiert ist, und optional auch einen zweiten axialen Abschnitt (972; 1672) umfasst, der in einer der ersten Umfangsrichtung entgegengesetzten zweiten Umfangsrichtung magnetisiert ist;
und wobei die Magnetsensorvorrichtung so relativ zur Welle ausgerichtet ist, dass eine erste Achse (X), die durch eine virtuelle Linie definiert ist, die durch den ersten Sensor (S1) und den zweiten Sensor (S2) verläuft, parallel zur Welle ist;
und wobei der erste Sensor (S1) und der zweite Sensor (S2) zum Messen einer ersten und einer zweiten Magnetfeldkomponente (Br1, Br2) ausgelegt sind, die radial in Bezug auf die Welle ausgerichtet sind;
und wobei der erste Sensor (S1) an einer ersten axialen Position in der Nähe eines Rands (975; 1675) des ersten magnetisierten axialen Abschnitts angeordnet ist und wobei der zweite Sensor (S2) in der Nähe eines Rands (977; 1677) des zweiten magnetisierten axialen Abschnitts angeordnet ist, falls vorhanden.

14. Magnetoelastisches Drehmomentsensorsystem (1870; 1970) nach einem der Ansprüche 1 bis 8,
wobei die Welle einen ersten axialen Abschnitt (1871; 1971), der in einer ersten Umfangsrichtung magnetisiert ist, und einen zweiten axialen Abschnitt (1872; 1972) umfasst, der ebenfalls in der ersten Umfangsrichtung magnetisiert ist;
und wobei die Magnetsensorvorrichtung so relativ zur Welle ausgerichtet ist, dass eine erste Achse (X), die durch eine virtuelle Linie definiert ist, die durch den ersten Sensor (S1) und den zweiten Sensor (S2) verläuft, parallel zur Welle ist;
und wobei der erste Sensor (S1) und der zweite Sensor (S2) zum Messen einer ersten und einer zweiten Magnetfeldkomponente (Br1, Br2) ausgelegt sind, die radial in Bezug auf die Welle ausgerichtet sind;
und wobei der erste Sensor (S1) und der zweite Sensor (S2) entweder beide in der Nähe von inneren Rändern der jeweiligen axialen Abschnitte oder beide in der Nähe von äußeren Rändern der jeweiligen axialen Abschnitte angeordnet sind.

15. Verfahren (2000) zum Messen eines auf eine Welle ausgeübten Drehmoments, das die Schritte umfasst zum:
a) Bereitstellen (2001) einer Welle, die mindestens einen axialen Abschnitt umfasst, der in einer Umfangsrichtung magnetisiert ist;
b) Bereitstellen (2002) einer Magnetsensorvorrichtung in Form einer einzelnen eingehausten Vorrichtung, die mindestens drei Halbleitersubstrate umfasst, einschließlich: eines ersten Halbleitersubstrats, das mindestens eine Verarbeitungsschaltung umfasst; eines zweiten Halbleitersubstrats, das einen ersten Magnetsensor (S1) umfasst; und eines dritten Halbleitersubstrats, das einen zweiten Magnetsensor (S2) umfasst, wobei die Magnetsensorvorrichtung eine auf Waferebene eingehauste Vorrichtung oder eine Vorrichtung ist, die einen Leiterrahmen umfasst, und wobei das erste Halbleitersubstrat (109) zwischen dem zweiten und dem dritten Halbleitersubstrat (106a, 106b) angeordnet ist;
c) Anordnen (2003) der Sensorvorrichtung in der Nähe der Welle;
d) Messen (2004) einer ersten Magnetfeldkomponente unter Verwendung des ersten Magnetsensors (S1); und Messen einer zweiten Magnetfeldkomponente unter Verwendung des zweiten Magnetsensors (S2);
e) Ermitteln (2005) einer paarweisen Differenz zwischen den Magnetfeldkomponenten unter Verwendung der Verarbeitungsschaltung;
f) Ausgeben (2006) eines Signals, das ein auf die Welle ausgeübtes Drehmoment angibt, auf Grundlage der paarweisen Differenz.

## Revendications

1. Système de capteur de couple magnétoélastique, comprenant :
- un arbre comprenant au moins une section axiale magnétisée dans une direction circonférentielle;
- un dispositif de capteur magnétique disposé à proximité de l'arbre, et comprenant trois substrats semi-conducteurs, dont un premier substrat semi-conducteur (109) comprenant au moins un circuit de traitement, un deuxième substrat semi-conducteur (106a) comprenant un premier capteur magnétique (S1), et un troisième substrat semi-conducteur (106b) comprenant un deuxième capteur magnétique (S2), chaque capteur magnétique étant configuré pour mesurer une composante de champ magnétique d'un champ magnétique généré par ledit arbre lorsqu'un couple est exercé sur l'arbre;
dans lequel les premier, deuxième et troisième substrats semi-conducteurs (109, 106a, 106b) sont incorporés dans un seul dispositif encapsulé ayant une pluralité de bornes électriquement connectées au premier substrat (109); et
dans lequel le seul dispositif encapsulé est un dispositif encapsulé au niveau de la plaquette semi-conductrice ou un dispositif comprenant une grille de connexion, dans lequel le premier substrat semi-conducteur (109) est agencé entre le deuxième et le troisième substrat semi-conducteur (106a, 106b); et
dans lequel le circuit de traitement est configuré pour déterminer une différence par paire entre les composantes de champ mesurées, et pour fournir en sortie un signal indicatif d'un couple exercé sur ledit arbre, sur la base de ladite différence par paire.

2. Système de capteur de couple magnétoélastique selon la revendication 1,
dans lequel le dispositif de capteur magnétique comprend en outre des moyens pour appliquer un courant de polarisation connu aux capteurs magnétiques et des moyens pour mesurer des tensions sur les capteurs magnétiques, ou comprend en outre des moyens pour appliquer une tension de polarisation connue sur lesdits capteurs magnétiques et des moyens pour mesurer des courants circulant à travers les capteurs magnétiques,
et dans lequel le circuit de traitement est configuré pour estimer une première température du premier capteur (S1), et une deuxième température du deuxième capteur (S2) sur la base du courant appliqué et les tensions mesurées ou sur la base de la tension appliquée et les courants mesurés, et pour compenser en température les signaux obtenus à partir du premier et du deuxième capteur, et pour déterminer ladite différence sur la base du premier et du deuxième signal de capteur compensés en température.

3. Système de capteur de couple magnétoélastique selon l'une quelconque des revendications précédentes,
dans lequel le premier substrat (109) comprend en outre un capteur de température pour mesurer une température du substrat principal, et dans lequel le circuit de traitement est configuré pour corriger en température les signaux des capteurs, et pour déterminer ladite différence sur la base des signaux des capteurs corrigés en température.

4. Système de capteur de couple magnétoélastique selon l'une quelconque des revendications précédentes,
dans lequel chacun des substrats de capteur (106a, 106b) comprend en outre un capteur de température pour mesurer une température dudit substrat de capteur, et
dans lequel le circuit de traitement est configuré pour corriger en température les signaux des capteurs, et pour déterminer ladite différence sur la base des signaux des capteurs corrigés en température.

5. Système de capteur de couple magnétoélastique selon l'une quelconque des revendications précédentes,
dans lequel le premier substrat semi-conducteur (109) comprend principalement du silicium;
et dans lequel le deuxième et le troisième substrat semi-conducteur (106a, 106b) comprennent principalement du silicium, et/ou sont des substrats de silicium discrets.

6. Système de capteur de couple magnétoélastique selon l'une quelconque des revendications 1 à 4,
dans lequel le premier substrat semi-conducteur (109) comprend principalement du silicium;
et dans lequel le deuxième et le troisième substrat semi-conducteur (106a, 106b) comprennent un matériau semi-conducteur composé sélectionné dans le groupe III-V.

7. Système de capteur de couple magnétoélastique selon l'une quelconque des revendications précédentes,
dans lequel le dispositif de capteur est un dispositif encapsulé au niveau de la plaquette semi-conductrice;
dans lequel le premier substrat semi-conducteur (109) est situé entre le deuxième et le troisième substrat semi-conducteur (106a, 106b);
et dans lequel le premier substrat semi-conducteur (109) est électriquement connecté au deuxième substrat semi-conducteur (106a) et au troisième substrat semi-conducteur (106b) au moyen d'au moins une couche de redistribution (RDL).

8. Système de capteur de couple magnétoélastique selon l'une quelconque des revendications 1 à 6,
dans lequel le dispositif de capteur magnétique comprend en outre une grille de connexion;
dans lequel le premier substrat (709) est situé entre le deuxième et le troisième substrat semi-conducteur (706a, 706b) sur un seul côté de la grille de connexion;
et dans lequel le premier substrat semi-conducteur (709) est électriquement connecté au deuxième substrat semi-conducteur (706a) et au troisième substrat semi-conducteur (706b) au moyen de fils de connexion.

9. Système de capteur de couple magnétoélastique (1070; 1770) selon l'une quelconque des revendications précédentes,
dans lequel l'arbre comprend au moins une première section axiale magnétisée dans une première direction circonférentielle, et éventuellement aussi une deuxième section axiale magnétisée dans une deuxième direction circonférentielle opposée à la première direction circonférentielle;
et dans lequel le dispositif de capteur magnétique est orienté par rapport à l'arbre de telle sorte qu'un premier axe (X) défini par une ligne virtuelle passant par le premier capteur (S1) et le deuxième capteur (S2) est parallèle à l'arbre;
et dans lequel le premier capteur (S1) et le deuxième capteur (S2) sont configurés pour mesurer une première et une deuxième composante de champ magnétique (Bax1, Bax2) orientée parallèlement à l'arbre;
et dans lequel le premier capteur (S1) est situé à une première position axiale proche d'un milieu de la première section axiale magnétisée, et dans lequel le deuxième capteur (S2) est situé proche d'un milieu de la deuxième section axiale si présente.

10. Système de capteur de couple magnétoélastique (1370; 1570) selon l'une quelconque des revendications 1 à 8,
dans lequel le dispositif de capteur magnétique est orienté par rapport à l'arbre de telle sorte qu'un premier axe (X) défini par une ligne virtuelle passant par le premier capteur (S1) et le deuxième capteur (S2) est orienté radialement par rapport à l'arbre;
et dans lequel le premier capteur (S1) et le deuxième capteur (S2) sont configurés pour mesurer une première et une deuxième composante de champ magnétique (Bax1, Bax2) orientée parallèlement à l'arbre;
et dans lequel le premier capteur (S1) est situé à une position axiale proche d'un milieu de la section axiale magnétisée à une première distance radiale (d1) de l'arbre,
et dans lequel le deuxième capteur (S2) est situé à la même position axiale que le premier capteur (S1) mais à une deuxième distance radiale (d2) de l'arbre, plus grande que la première distance radiale (d1).

11. Système de capteur de couple magnétoélastique (1170) selon l'une quelconque des revendications 1 à 8,
dans lequel le dispositif de capteur magnétique est orienté par rapport à l'arbre de telle sorte qu'un premier axe (X) défini par une ligne virtuelle passant par le premier capteur (S1) et le deuxième capteur (S2) est parallèle à l'arbre;
et dans lequel le premier capteur (S1) et le deuxième capteur (S2) sont configurés pour mesurer une première et une deuxième composante de champ magnétique (Br1, Br2) orientées radialement par rapport à l'arbre;
et dans lequel le premier capteur (S1) est situé à une première position axiale près d'un premier bord (1175) de la section axiale magnétisée (1171), et dans lequel le deuxième capteur (S2) est situé à une deuxième position axiale près d'un deuxième bord (1176) de la section axiale magnétisée (1171).

12. Système de capteur de couple magnétoélastique (1270; 1470) selon l'une quelconque des revendications 1 à 8,
dans lequel le dispositif de capteur magnétique est orienté par rapport à l'arbre de telle sorte qu'un premier axe (X) défini par une ligne virtuelle passant par le premier capteur (S1) et le deuxième capteur (S2) est orienté radialement par rapport à l'arbre;
et dans lequel le premier capteur (S1) et le deuxième capteur (S2) sont configurés pour mesurer une première et une deuxième composante de champ magnétique (Br1, Br2) orientées radialement par rapport à l'arbre;
et dans lequel le premier et le deuxième capteur (S1, S2) sont situés à une position axiale près d'un premier bord (1275; 1475) de la section axiale magnétisée (1271; 1471).

13. Système de capteur de couple magnétoélastique (970; 1670) selon l'une quelconque des revendications 1 à 8,
dans lequel l'arbre comprend au moins une première section axiale (971; 1671) magnétisée dans une première direction circonférentielle, et éventuellement aussi une deuxième section axiale (972; 1672) magnétisée dans une deuxième direction circonférentielle opposée à la première direction circonférentielle;
et dans lequel le dispositif de capteur magnétique est orienté par rapport à l'arbre de telle sorte qu'un premier axe (X) défini par une ligne virtuelle passant par le premier capteur (S1) et le deuxième capteur (S2) est parallèle à l'arbre;
et dans lequel le premier capteur (S1) et le deuxième capteur (S2) sont configurés pour mesurer une première et une deuxième composante de champ magnétique (Br1, Br2) orientées radialement par rapport à l'arbre;
et dans lequel le premier capteur (S1) est situé à une première position axiale près d'un bord (975; 1675) de la première section axiale magnétisée, et dans lequel le deuxième capteur (S2) est situé près d'un bord (977; 1677) de la deuxième section axiale magnétisée si présente.

14. Système de capteur de couple magnétoélastique (1870; 1970) selon l'une quelconque des revendications 1 à 8,
dans lequel l'arbre comprend une première section axiale (1871; 1971) magnétisée dans une première direction circonférentielle, et une deuxième section axiale (1872; 1972) également magnétisée dans la première direction circonférentielle;
et dans lequel le dispositif de capteur magnétique est orienté par rapport à l'arbre de telle sorte qu'un premier axe (X) défini par une ligne virtuelle passant par le premier capteur (S1) et le deuxième capteur (S2) est parallèle à l'arbre;
et dans lequel le premier capteur (S1) et le deuxième capteur (S2) sont configurés pour mesurer une première et une deuxième composante de champ magnétique (Br1, Br2) orientées radialement par rapport à l'arbre;
et dans lequel le premier capteur (S1) et le deuxième capteur (S2) sont tous deux situés près des bords intérieurs des sections axiales respectives, ou sont tous deux situés près des bords extérieurs des sections axiales respectives.

15. Procédé (2000) de mesure d'un couple exercé sur un arbre, comprenant les étapes suivantes :
a) fournir (2001) un arbre comprenant au moins une section axiale, qui est magnétisée dans une direction circonférentielle;
b) fournir (2002) un dispositif de capteur magnétique sous la forme d'un seul dispositif encapsulé comprenant au moins trois substrats semi-conducteurs, incluant : un premier substrat semi-conducteur comprenant au moins un circuit de traitement; un deuxième substrat semi-conducteur comprenant un premier capteur magnétique (S1); et un troisième substrat semi-conducteur comprenant un deuxième capteur magnétique (S2), dans lequel le dispositif de capteur magnétique est un dispositif encapsulé au niveau de la plaquette semi-conductrice ou un dispositif comprenant une grille de connexion, et dans lequel le premier substrat semi-conducteur (109) est agencé entre le deuxième et le troisième substrat semi-conducteur (106a, 106b);
c) agencer (2003) le dispositif de capteur à proximité de l'arbre;
d) mesurer (2004) une première composante de champ magnétique à l'aide du premier capteur magnétique (S1); et mesurer une deuxième composante de champ magnétique en utilisant le deuxième capteur magnétique (S2);
e) déterminer (2005) une différence par paire entre les composantes de champ magnétique en utilisant le circuit de traitement;
f) fournir en sortie (2006) un signal indicatif d'un couple exercé sur ledit arbre, sur la base de ladite différence par paire.
